# EUROPÄISCHE PATENTSCHRIFT

(11) **EP 3 022 045 B1**
(45) Veröffentlichungstag und Bekanntmachung des Hinweises auf die Patenterteilung: **08.05.2019**
(21) Anmeldenummer: 14739820.0
(22) Anmeldetag: 16.07.2014
(51) Int. Cl.: B29C 64/129, B29C 64/286

(54) **VERFAHREN UND VORRICHTUNG ZUM HERSTELLEN EINES DREIDIMENSIONALEN OBJEKTS SOWIE BELICHTUNGSMASKENERZEUGUNGSEINRICHTUNG**
METHOD AND DEVICE FOR PRODUCING A THREE-DIMENSIONAL OBJECT AND EXPOSURE MASK GENERATION DEVICE
PROCÉDÉ ET DISPOSITIF DE FABRICATION D'UN OBJET EN TROIS DIMENSIONS AINSI QUE SYSTÈME DE PRODUCTION DE MASQUES D'EXPOSITION

(30) Priorität: 16.07.2013 DE 102013107571
(43) Veröffentlichungstag der Anmeldung: 25.05.2016
(73) Patentinhaber: Rapid Shape GmbH, 71296 Heimsheim (DE)
(72) Erfinder: JOHN, Hendrik, 38259 Salzgitter-Bad (DE); SCHULTHEISS, Andreas, 75417 Mühlacker (DE)
(74) Vertreter: Hoeger, Stellrecht & Partner Patentanwälte mbB
(86) Internationale Anmeldenummer: PCT/EP2014/065234
(87) Internationale Veröffentlichungsnummer: WO 2015/007772

(56) Entgegenhaltungen:
- EP-A1- 1 849 587
- EP-A2- 0 856 393
- WO-A1-96/00422
- WO-A1-2005/110722

## Beschreibung

Die vorliegende Erfindung betrifft ein Verfahren zum Herstellen eines dreidimensionalen Objekts durch schichtweises Verfestigen eines unter Einwirkung von Strahlung verfestigbaren Materials unter Verwendung von Belichtungsmasken, wobei zum Ausbilden jeder zu verfestigenden Objektschicht des Objekts in einer Bauebene eine einzige Belichtungsmaske erzeugt wird, mittels derer die Strahlung selektiv in die Bauebene projiziert wird, nach Anspruch 1.

Ferner betrifft die vorliegende Erfindung eine Belichtungsmaskenerzeugungseinrichtung für eine Vorrichtung zum Herstellen eines dreidimensionalen Objekts durch schichtweises Verfestigen eines unter Einwirkung von Strahlung verfestigbaren Materials unter Verwendung von Belichtungsmasken, umfassend eine Strahlungsquelle zum Erzeugen der Strahlung und die Belichtungsmaskenerzeugungseinrichtung, welche Belichtungsmaskenerzeugungseinrichtung zum Ausbilden jeder zu verfestigenden Objektschicht des Objekts in einer Bauebene mindestens eine Belichtungsmaske erzeugt, mittels derer die Strahlung selektiv in die Bauebene projiziert wird, nach Anspruch 8.

Außerdem betrifft die vorliegende Erfindung eine Vorrichtung nach Anspruch 14, zum Herstellen eines dreidimensionalen Objekts durch schichtweises Verfestigen eines unter Einwirkung von Strahlung verfestigbaren Materials unter Verwendung von Belichtungsmasken, umfassend eine Strahlungsquelle zum Erzeugen der Strahlung und eine Belichtungsmaskenerzeugungseinrichtung.

Die vorliegende Erfindung betrifft auch die Verwendung nach Anspruch 15 einer Vorrichtung nach Anspruch 14. Verfahren und Vorrichtungen der eingangs beschriebenen Art sind in vielfältiger Weise bekannt, beispielsweise aus der DE 199 29 199 A1. Dreidimensionale Objekte werden dabei hergestellt mittels schichtweisem Aushärten oder Verschmelzen von vorzugsweise Kunststoffen mittels digitaler Maskenbelichtung, bei der der Energieeintrag pro Fläche in Abhängigkeit von der lokal verfügbaren Lichtleistung über die Belichtungszeit gesteuert wird.

Bei der Herstellung dreidimensionaler Objekte mittels dieser Verfahren und Vorrichtungen ergeben sich verschiedene zu lösende Probleme. So ist es insbesondere wichtig, eine Lichtintensitätsverteilung zu homogenisieren. Bedingt durch ein zum Einsatz kommendes optisches System, welches insbesondere eine Strahlungsquelle und eine Projektionsoptik umfasst, ergibt sich in der Regel eine inhomogene Intensitätsverteilung bei der Abbildung. Eine solche Inhomogenität soll jedoch möglichst vermieden werden, so dass in einer Bau-Projektions-Ebene, in welcher das dreidimensionale Objekt entsteht, die Intensitätsverteilung möglichst homogen ist.

Ferner ist es wichtig, eine gleichmäßige Durchhärtetiefe bei unterschiedlich ausgebildeten Querschnittsflächen der Objektschichten des Objekts zu erreichen. So werden zum einen Strukturen in der Objektschicht mit einer filigranen Struktur beziehungsweise Querschnittsfläche weniger tief ausgehärtet als Strukturen mit einer großflächigen Querschnittsfläche. Außerdem kann im Konturbereich der Objektschicht ein sogenanntes Überstrahlen auftreten. Dies kann insbesondere zur Folge haben, dass beispielsweise kleine Hohlräume in massiveren Strukturen durch Überstrahlen von Konturen derselben gar nicht ausgebildet werden, da das Material im Konturbereich aufgrund des Überstrahlens bis in die auszubildenden Hohlraum hinein aushärtet. Und schließlich ist häufig die sogenannte Grünglingshärte bei der Herstellung des dreidimensionalen Objekts nicht ausreichend. Hierunter ist insbesondere zu verstehen, dass es bei besonders filigranen (Stütz-)Strukturen während des Herstellens des Objekts nur zu einer geringen Aushärtung kommen kann, so dass diese filigranen Strukturen häufig abreißen. Ebenso kann es passieren, dass bei sehr filigranen Strukturen die kritische Energie zur Aushärtung nicht erreicht wird, und so die filigranen Strukturen nicht erzeugt werden. Bei massiven Bauteilen ist es unter Umständen erwünscht, den Innenbereich schon während des Bauprozesses überzubelichten, um eine höhere Grünlingshärte im Bauteil zu erreichen, da die Strahlung beim Nachbelichtungsprozess insbesondere bei opaquen Materialien nur eine geringe Eindringtiefe aufweist.

Insbesondere um eine gleichmäßigere Durchhärtetiefe bei unterschiedlich ausgebildeten Querschnittsflächen zu erreichen, ist es aus dem Stand der Technik bekannt, über eine Grauwertsteuerung der einzelnen Pixel der Masken oder über eine Mehrfachbelichtung durch Verwendung mehrerer Masken für eine einzige Objektschicht, eine gesteuerte, pixelgenaue Durchhärtung des Objekts beziehungsweise der diese ausbildenden Objektschichten zu erreichen. Auf die eingangs genannte DE 199 29 199 A1 zur Grauwertsteuerung sowie die EP 1 849 586 A1 zur Mehrfachbelichtung sei verwiesen. Ein Nachteil bei der Grauwertsteuerung ist insbesondere, dass aufgrund der Vernichtung/Reduzierung von Strahlungsintensität stets eine längere Belichtungszeit pro Belichtungszyklus einer Objektschicht erforderlich ist, um den erforderlichen Energieeintrag pro Objektschicht zu erreichen. Der Grund hierfür ist insbesondere, dass sich zur Optimierung ein Energieeintrag immer an den niedrigsten Intensitätswerten im Bild orientiert. Bei der Mehrfachbelichtung müssen mehrere Masken bereitgestellt und nacheinander belichtet werden. Auch dieses Vorgehen hat somit eine Verlängerung der Belichtungszeit zur Folge.

Und schließlich ist es wünschenswert, dass das dreidimensionale Objekt eine möglichst hohe Oberflächenqualität aufweist und Abmessungen des Objekts möglichst exakt eingehalten werden.

Aus der EP 0 856 393 A2 sind Verfahren und Vorrichtungen zum Herstellen eines laminierten Gegenstands bekannt. In der WO 96/00422 A1 sind programmierbare Masken für die Herstellung dreidimensionaler Objekte beschrieben. Ein Verfahren zur Herstellung eines dreidimensionalen Objekts mit Auflösungsverbesserung mittels Pixel-Shift ist in der WO 2005/110722 A1 offenbart. Und schließlich sind aus der EP 1 849 587 A1 Vorrichtungen und Verfahren zur Herstellung eines dreidimensionalen Objekts mittels Maskenbelichtung bekannt.

Es ist daher eine Aufgabe der vorliegenden Erfindung, ein Verfahren und eine Vorrichtung sowie eine Belichtungsmaskenerzeugungseinrichtung der eingangs beschriebenen Art so zu verbessern, dass dreidimensionale Objekte mit einer verbesserten, glatteren Oberfläche auf einfache Weise herstellbar sind.

Diese Aufgabe wird bei einem Verfahren der eingangs beschriebenen Art erfindungsgemäß dadurch gelöst, dass die Bauebene während einer Belichtungszeit mit der einzigen digitalen Belichtungsmaske oszillierend belichtet wird durch Erzeugen einer oszillierenden Relativbewegung zwischen einem von der einzigen digitalen Belichtungsmaske erzeugten Bild in der Bauebene und dem herzustellenden Objekt.

Darunter ist somit zu verstehen, dass eine oszillierende Relativbewegung zwischen dem Bild in der Bauebene und dem herzustellenden Objekt erzeugt wird. Der Vorteil einer solchen oszillierenden Belichtung ist insbesondere, dass auf einfache Weise eine Glättung der Oberfläche des herzustellenden Objekts erreichbar ist, da so Ecken und Stufen im Randbereich der belichteten Objektschicht quasi verwischt werden, anders als bei der Antialiasing-Funktion durch Graustufen im Konturbereich. Somit ist auch, wie beispielsweise in der DE 10 2004 022 961 B4 beschrieben, keine Mehrfachbelichtung erforderlich, sondern mit einer einzigen Maskenbelichtung kann diese Kantenglättung erreicht werden.

Vorteilhaft ist es, wenn ein Oszillationshub der Belichtung in einer x- und/oder einer y-Richtung parallel zur Bauebene in einem Bereich liegt, welcher maximal einer Breite eines Pixels entspricht. Mit anderen Worten ist es vorteilhaft, wenn zur Kantenglättung eine Oszillation im Subpixelbereich realisiert wird. Günstig ist es, wenn der Oszillationshub maximal 0,5 Pixel beträgt, insbesondere maximal 0,25 Pixel.

Besonders günstig ist es, wenn eine Oszillation der Belichtung in der x- und der y-Richtung während der Belichtungszeit zu einer kreisförmigen oder im Wesentlichen kreisförmigen Oszillation überlagert ist. So kann eine insgesamt vollständige kreisende Bewegung ausgeführt werden, was zu einer Kantenglättung im entsprechenden Subpixelbereich führt. Alle Ecken, die durch die Belichtungsmaske vorgegeben werden, können so mit dem entsprechenden Radius des durch die Oszillation definierten Kreises geglättet werden. Insbesondere ist es günstig, wenn die Oszillation derart vorgenommen wird, dass am Ende der Belichtungszeit zur Verfestigung einer einzigen Objektschicht ganzzahlige Vielfache einer kreisförmigen Oszillation vollendet sind. So kann ein besonders gleichmäßiger Energieeintrag im Randbereich der auszubildenden Objektschicht erreicht werden.

Der Nachteil, dass das Bauteil bei der Oszillation um den zweifachen Oszillationsradius in x- und y-Richtung aufgeweitet wird, kann insbesondere dadurch kompensiert werden, dass der Querschnittsfläche in x- und y-Richtung entlang der Außen- und Innenkontur ein negativer Offset in Größe des Oszillationsradius zugewiesen wird.

Gemäß einer bevorzugten Variante des erfindungsgemäßen Verfahrens kann vorgesehen sein, dass eine Strahlungsquelle zur Erzeugung der Strahlung und/oder die Belichtungsmaske und/oder eine Abbildungsoptik zum Abbilden der Strahlung auf die Bauebene und/oder das herzustellende Objekt während der Belichtungszeit oszillierend bewegt werden. Je nach Kombination der relativ zueinander bewegten Elemente kann so eine oszillierende Belichtung erreicht werden.

Auf besonders einfache Weise lässt sich eine oszillierende Belichtung realisieren, wenn eine Abbildungsoptik mit einer rotierenden planparallelen Scheibe verwendet wird, bei der die Scheibe um eine zur Bauebene senkrechte oder im Wesentlichen senkrechte Rotationsachse rotiert wird, die mit der Rotationsachse einen von 90° abweichenden Winkel einschließt.

Vorteilhaft ist es, wenn zum Ausbilden jeder zu verfestigenden Objektschicht des Objekts in einer Bauebene eine einzige Belichtungsmaske erzeugt wird. Auf diese Weise kann das Objekts schneller und einfacher hergestellt werden.

Zum Ausbilden jeder zu verfestigenden Objektschicht des Objekts in einer Bauebene wird eine einzige digitale Belichtungsmaske erzeugt. So ist es insbesondere möglich, nur mit zwei verschiedenen Bitwerten, beispielsweise einem ersten Bitwert, dem der Wert "durchlässig" zugeordnet wird, und einem zweiten Bitwert, dem der Wert "nicht durchlässig" zugeordnet wird. Dabei sind "durchlässig" und nicht durchlässig nicht nur wörtlich zu verstehen, sondern auch so, dass der der Bitwert "durchlässig" eine höhere Strahlungsintensität in der Bauebene definiert als der Bitwert "nicht durchlässig".

Vorteilhaft ist es, wenn für jede Belichtungsmaske in Abhängigkeit der zu verfestigenden Objektschicht eine einzige, 2-Bit-Bitmap berechnet wird, welche jedem Pixel der Belichtungsmaske entweder den Bit-Wert "durchlässig" oder den Bit-Wert "nicht durchlässig" zuordnet, dass mindestens einem Flächenbereich der 2-Bit-Bitmap mit einer Strukturgröße unterhalb einer Grenzstrukturgröße der Bit-Wert "durchlässig" zugewiesen wird und dass mindestens einem Flächenbereich oberhalb der Grenzstrukturgröße eine Belichtungstextur zugewiesen wird, welche Belichtungstextur in Form eines Musters von Pixeln mit den Bit-Werten "durchlässig" und "nicht durchlässig" ausgebildet ist. Diese Vorgehensweise ermöglicht es insbesondere, eine herzustellende Objektschicht mit lediglich einer einzigen Belichtungsmaske zu belichten. Zudem ist eine Grauwertsteuerung grundsätzlich überflüssig, optional jedoch noch immer möglich. Beispielsweise ist es möglich, als 2-Bit-Bitmap lediglich eine schwarz/ weiß-Bitmap vorzusehen. Selbstverständlich ist es auch denkbar, die Bit-Werte "durchlässig" für jede Belichtungsmaske unterschiedlich hell zu wählen. Vorzugsweise soll jede Bitmap lediglich zwei unterschiedliche Intensitätswerte für die Durchlässigkeit der Belichtungsmaske aufweisen, die exemplarisch mit "durchlässig" und "nicht durchlässig" bezeichnet sind. Insbesondere können auch beide Bit-Werte eine gewisse Durchlässigkeit für die Strahlung gestatten, wobei die Durchlässigkeit des Bit-Werts "durchlässig" stets größer ist als die Durchlässigkeit des Bit-Werts "nicht durchlässig". Ferner kann das Verfahren auch bei reflexiven System Anwendung finden, wobei dann die Bit-Werte "durchlässig" und "nicht durchlässig" in analoger Weise zu verstehen sind, also die Belichtungsmaske die Strahlung beispielsweise reflektiert oder in gewünschter Weise auf die Bauebene ablenkt, wenn der Bit-Wert "durchlässig" ist und die Strahlung nicht reflektiert, absorbiert oder neben die Bauebene ablenkt, wenn der Bit-Wert "nicht durchlässig" ist. Vorzugsweise werden Belichtungstexturen verwendet, die regelmäßige Muster von Pixeln mit den beiden verfügbaren Bit-Werten der 2-Bit-Bitmap aufweisen. Beispielsweise können schachbrettartige, zickzackförmige Linien oder Streifen enthaltende Muster vorgesehen sein. Insbesondere ist es mit der mindestens einen Belichtungsmaske möglich, den Energieeintrag durch die Strahlung in das verfestigbare Material in der Bauebene selektiv auf Pixelniveau zu steuern. Ferner ist es auch möglich, jedem Flächenbereich der 2-Bit-Bitmap mit einer Strukturgröße unterhalb einer Grenzstrukturgröße der Bit-Wert "durchlässig" zuzuweisen und jedem Flächenbereich oberhalb der Grenzstrukturgröße eine Belichtungstextur zuzuweisen, welche Belichtungstextur in Form eines Musters von Pixeln mit den Bit-Werten "durchlässig" und "nicht durchlässig" ausgebildet ist. Insgesamt kann so die Herstellung eines dreidimensionalen Objekts einfacher und schneller erfolgen.

Günstig ist es, wenn die Belichtungstextur höchstens so viele Pixel mit dem Bit-Wert "nicht durchlässig" wie Pixel mit dem Bit-Wert "durchlässig" aufweist. Auf diese Weise kann sichergestellt werden, dass im Wesentlichen eine flächige Struktur erzeugbar ist. Insbesondere kann im beschriebenen Extremfall, also wenn so viele Pixel mit dem Bit-Wert "durchlässig" wie mit dem Bit-Wert "nicht durchlässig" vorgesehen sind, eine schachbrettartige Struktur ausgebildet werden, bei der die unterschiedlichen Pixel abwechselnd angeordnet sind.

Vorteilhafterweise weist jede Belichtungstextur einen Belichtungsabschwächungswert auf, welcher größer als 0 ist und maximal 0,5 beträgt. Auf diese Weise lässt sich eine Intensität der Strahlung in gewünschten Bereichen der Objektschicht mittels der Belichtungsmaske mit einem Belichtungsabschwächungswert im angegebenen Bereich in gewünschter Weise abschwächen.

Günstig ist es, wenn mindestens einem Flächenbereich mit einer Strukturgröße oberhalb der Grenzstrukturgröße eine Belichtungstextur in Abhängigkeit seiner Strukturgröße zugewiesen wird und wenn mit zunehmender Strukturgröße der Belichtungsabschwächungswert der Belichtungstextur zunimmt. Auf diese Weise kann beispielsweise erreicht werden, dass insbesondere größere Strukturen mit einer im Mittel geringeren Intensität der Strahlung beaufschlagt werden können als filigranere Strukturen. Durch die Übertragungsfunktion des optischen Systems, auch als Modulationstransferfunktion ("MTF") bekannt, - hier als "Unschärfe" bezeichnet - und den Überstrahlungseffekt in der Bauebene wird in dem Material in der Bauebene ein Mittelwert an Lichtintensität über die Strukturfläche eingekoppelt. Insbesondere kann die Abhängigkeitsfunktion der Belichtungstextur von der Strukturgröße eine lineare Funktion oder auch eine Treppenfunktion bilden. Eine Treppenfunktion kann insbesondere eine Abhängigkeit dahingehend definieren, dass eine endliche Anzahl diskreter Flächentexturen vorgesehen ist, die jeweils einem diskreten Belichtungsabschwächungswert zugeordnet sind. Beispielsweise können fünf, zehn, 15 und 20 Stufen, also n Stufen, vorgesehen sein, um einer entsprechende Anzahl von Belichtungstexturen jeweils einen entsprechenden Belichtungsabschwächungswert im Bereich von 0 bis 0,5 zuzuordnen. Insbesondere ist es vorteilhaft, wenn jedem Flächenbereich mit einer Strukturgröße oberhalb der Grenzstrukturgröße eine Belichtungstextur in Abhängigkeit seiner Strukturgröße zugewiesen wird.

Um die Stabilität des Objekts zu erhöhen, ist es vorteilhaft, wenn identische Belichtungstexturen von Belichtungsmasken zur Belichtung aufeinanderfolgender Objektschichten in einer Ebene parallel zur Bauebene um eine ganzzahlige Pixelzahl relativ zueinander versetzt angeordnet sind. Vorzugsweise sind die identischen Belichtungstexturen um 1 Pixel in einer x- oder y-Richtung der Ebene parallel zur Bauebene versetzt. Durch diese Variante des Verfahrens kann insbesondere sichergestellt werden, dass nicht zwei Pixel mit dem Bit-Wert "nicht durchlässig" in aufeinanderfolgenden Objektschichten übereinander liegen.

Günstig ist es, wenn unterschiedliche Texturmuster zur Ausbildung der Belichtungstexturen bereitgestellt werden, die ein Verhältnis von Pixeln mit dem Bit-Wert "nicht durchlässig" und von Pixeln mit dem Bit-Wert "durchlässig" aufweisen, die in einem Bereich zwischen 0 und 1 liegen. Durch das Bereitstellen der Texturmuster können die dann festgelegten Flächenbereiche der Objektschicht direkt mit dem jeweiligen Texturmuster gefüllt werden.

Vorzugsweise ist jede Belichtungstextur in Form einer Schraffur oder eines regelmäßigen Musters ausgebildet. Auf diese Weise kann zudem insbesondere sichergestellt werden, dass nicht zwei Pixel mit dem Bit-Wert "nicht durchlässig" in der Textur nebeneinander liegen.

Vorteilhaft ist es ferner, wenn nur Belichtungstexturen verwendet werden, bei denen allenfalls Ecken von Pixeln mit dem Bit-Wert "nicht durchlässig" aufeinandertreffen, jedoch keine Längskanten von Pixeln mit dem Bit-Wert "nicht durchlässig" aneinander angrenzen. Auf diese Weise kann vermieden werden, dass zwei Pixel mit dem Bit-Wert "nicht durchlässig" direkt aneinander angrenzen, so dass durch die Belichtungstextur keine größeren Bereiche mit nicht verfestigtem Material im Objekt erzeugt werden.

Auf besonders einfache Weise lassen sich regelmäßige Belichtungstexturen erzeugen, wenn diese durch eine Translation in einer Ebene parallel zur Bauebene in sich selbst überführbar sind. Mit anderen Worten können sie insbesondere aus einem einfachen, wenige Pixel umfassenden Grundmuster bestehen, welches durch entsprechende Translation regelmäßig angeordnet werden kann zur Ausbildung der Belichtungstextur.

Günstig ist, wenn die Translation durch einen Vektor definiert wird, welcher eine Länge aufweist, die n Pixeln in einer x-Richtung und m Pixeln in einer zur x-Richtung nicht parallelen y-Richtung entspricht, wobei n und m ganze Zahlen sind. So kann auf einfache Weise beispielsweise mit einer Maskenbelichtungseinrichtung eine Belichtungstextur generiert werden. Insbesondere können die x-Richtung und die y-Richtung senkrecht zueinander orientiert sein.

Vorteilhaft ist es, wenn die Belichtungstextur pixelweise gerastert ist. Dies ist insbesondere so zu verstehen, dass die kleinste Einheit der Belichtungstextur ein Pixel ist.

Um insbesondere eine feste, glatte, geschlossene Oberfläche des Objektes zu erzielen, ist es vorteilhaft, wenn jeder Belichtungsfläche, welche eine Querschnittsfläche des Objektes definiert, in jeder Belichtungsmaske für jede Aussen- und Innenkontur der Belichtungsfläche eine geschlossene Randlinie zugewiesen wird und wenn den die Randlinie ausbildenden Pixeln der Bit-Wert "durchlässig" zugewiesen wird.

Damit die Stabilität der Randlinie in einem optimalen Verhältnis zu einer Breite ausgebildet werden kann, ist es günstig, wenn eine Breite der Randlinie mindestens 2 Pixel beträgt. Insbesondere ist es vorteilhaft, wenn die Breite der Randlinie in einem Bereich von 2 bis 8 Pixeln liegt. Vorzugsweise liegt die Breite der Randlinie in einem Bereich von 2 bis 4 Pixeln.

Auf einfache Weise kann Material verfestigt werden, wenn als Strahlung elektromagnetische Strahlung oder Teilchenstrahlung verwendet wird. Günstigerweise wird insbesondere elektromagnetische Strahlung im ultravioletten Spektralbereich verwendet.

Um den Aufbau des Objekts so schnell wie möglich realisieren zu können, ist es vorteilhaft, wenn jeder Belichtungsmaske eine individuelle Belichtungszeit zugeordnet wird. So kann abhängig von der Form und Dicke der zu verfestigenden Objektschicht und lateraler Position der zu belichtenden Fläche innerhalb der Bauebene die Belichtungszeit optimiert vorgegeben werden, so dass nur solange belichtet werden muss, bis die Objektschicht die erforderliche Stabilität beziehungsweise Durchhärtetiefe aufweist.

Besonders einfach realisierbar wird das Verfahren, wenn die Belichtungszeit für alle Belichtungsmasken identisch ist. Auf diese Weise kann auf eine individuelle Zeitsteuerung verzichtet werden.

Gemäß einer weiteren bevorzugten Variante des erfindungsgemäßen Verfahrens kann vorgesehen sein, dass jeder Belichtungsfläche, welche eine Querschnittsfläche des Objektes definiert, in jeder Belichtungsmaske eine in sich geschlossene äußere Konturlinie zur Begrenzung der Belichtungsfläche zugewiesen wird, dass den Pixeln zur Ausbildung der Konturlinie der Bit-Wert "durchlässig" zugewiesen wird, dass jeder Belichtungsmaske eine innen an die Konturlinie angrenzende Trennlinie zugewiesen wird und dass den Pixeln zur Ausbildung der Trennlinie der Bit-Wert "nicht durchlässig" zugewiesen wird. Ferner kann es vorteilhaft sein, falls die auszubildende, durch die Belichtungsfläche definierte Objektschicht mindestens eine Ausnehmung aufweist, wenn eine in sich geschlossene innere Konturlinie zur Begrenzung der Objektschicht um die mindestens eine Ausnehmung herum definiert wird, wenn den Pixeln zur Ausbildung dieser Konturlinie der Bit-Wert "durchlässig" zugewiesen wird, wenn außen an diese Konturlinie direkt angrenzend eine Trennlinie definiert wird und wenn den Pixeln zur Ausbildung der Trennlinie der Bit-Wert "nicht durchlässig" zugewiesen wird. In beiden Fällen wird quasi eine Intensitätsschneise ausgebildet, und zwar jeweils direkt angrenzend an die Konturlinie zu Belichtungsfläche, also dem zu belichtenden Bereich der Objektschicht hin. Diese Intensitätsschneise bewirkt insbesondere, dass möglichst wenig Streulicht die Außen- und Innenkonturen überstrahlt, wodurch zum einen die Oberflächenqualität und zum anderen die Maßhaltigkeit des herzustellenden Objekts beeinträchtigt werden kann. Ferner kann es günstig sein, wenn die jeweilige Trennlinie direkt an die innere oder äußere Konturlinie angrenzt. Insbesondere ist es vorteilhaft, wenn mehr als eine Trennlinie vorgesehen ist. Insbesondere können zwei, drei oder mehr Trennlinien vorgesehen, die die entsprechende Zahl an Konturlinien voneinander trennen. Insbesondere kann eine der Trennlinien auch an eine Randlinie angrenzen, wie sie oben definiert wurde. Mit anderen Worten können auch zwei oder drei Trennlinien parallel zueinander verlaufen, die durch eine Konturlinie voneinander getrennt sein können. Optional ist es zudem denkbar, dass eine oder mehrere Trennlinien unterbrochen sind, beispielsweise durch quer verlaufende Verbindungslinien, die die Konturlinie mit einer weiteren Konturlinie oder mit einer Randlinie eines zu belichtenden Flächenbereichs der Objektschicht verbinden. Diese Verbindungslinien, die vorzugsweise quer, insbesondere senkrecht zur Trennlinie verlaufen, haben den Vorteil, dass so insgesamt die Stabilität des dreidimensionalen Objekts verbessert werden kann, und zwar ohne den Vorteil, den die Ausbildung der Trennlinie mit sich bringt, wesentlich zu beeinträchtigen.

Günstig ist es, wenn eine Breite der Konturlinie und/oder der Trennlinie mindestens 2 Pixel beträgt. Vorzugsweise liegt die Breite in einem Bereich von 2 bis 8 Pixeln. Vorzugsweise liegt eine Breite der Konturlinie und/oder der Trennlinie in einem Bereich von 2 bis 4 Pixeln. Die angegebene Mindestbreite ist insbesondere geeignet, einerseits die Vorteile der Ausbildung einer Konturlinie beziehungsweise einer Trennlinie zu gewährleisten und andererseits eine Stabilität des dreidimensionalen Objekts.

Vorteilhafterweise wird jeder Belichtungsmaske eine Trennlinie für diejenigen Flächenbereiche zugewiesen, deren Strukturgröße eine Breite und/oder Länge aufweist, welche mindestens doppelt so groß ist wie eine Breite der Konturlinie. Auf diese Weise kann insbesondere sichergestellt werden, dass besonders kleine, filigrane Strukturen nicht in ihrer Stabilität durch Ausbildung einer Trennlinie beeinträchtigt werden.

Die eingangs gestellte Aufgabe wird ferner bei einer Belichtungsmaskenerzeugungseinrichtung der eingangs beschriebenen Art erfindungsgemäß dadurch gelöst, dass die Belichtungsmaskenerzeugungseinrichtung eine Oszillationseinrichtung umfasst zum oszillierenden Belichten der Bauebene während einer Belichtungszeit. Oszillierend belichten bedeutet insbesondere, dass eine Oszillationsbewegung des auf die Bauebene abgebildeten Bildes relativ zum Objekt durch die Oszillationseinrichtung realisiert wird. Damit ist es möglich, mit einer solchen Oszillationseinrichtung kantige Strukturen entlang einer Kontur der Objektschicht zu glätten, und zwar indem eine äußere Kontur während der Belichtung der Objektschicht durch die Oszillation quasi verschmiert wird. Vorzugsweise ermöglicht es die Oszillationseinrichtung, eine natürliche Zahl an Oszillationen während der für die jeweilige Objektschicht vorgesehenen Belichtungszeit zu realisieren, um eine möglichst gleichmäßige Kantenglättung längs der Kontur der Objektschicht zu erreichen.

Günstig ist es, wenn die Oszillationseinrichtung einen Oszillationshub der Belichtung aufweist, welcher in einer x- und/oder einer y-Richtung parallel zur Bauebene in einem Bereich liegt, welcher maximal einer Breite eines Pixels entspricht. Vorzugsweise beträgt der Oszillationshub maximal 0,5 Pixel. Günstig ist es, wenn er maximal 0,25 Pixel beträgt. In jedem Fall ist es mit einer solchen Oszillationshub im Subpixelbereich möglich, eine Außen- oder Innenkontur der zu verfestigenden Objektschicht zu glätten.

Um Kanten der Kontur der zu verfestigenden Objektschicht abzurunden, ist es günstig, wenn die Oszillationseinrichtung ausgebildet ist zum Überlagern einer Oszillation der Belichtung in der x- und der y-Richtung während der Belichtungszeit zu einer kreisförmigen oder im Wesentlichen kreisförmigen Oszillation. Insbesondere kann genau eine kreisförmige oder im Wesentlichen kreisförmige Oszillation während der Belichtungszeit mit der Oszillationseinrichtung realisiert werden, um so eine möglichst gleichmäßige Kantenglättung zu erreichen.

Um die oben beschriebene Relativbewegung für die oszillierende Belichtung zu erreichen, ist es vorteilhaft, wenn die Oszillationseinrichtung gekoppelt ist mit der Strahlungsquelle und/oder der Belichtungsmaskenerzeugungseinrichtung und/oder einer Abbildungsoptik zum Abbilden der Strahlung auf die Bauebene und/oder einem Träger für das herzustellende Objekt zum oszillierenden Bewegen derselben während der Belichtungszeit. Beispielsweise kann so die Belichtungsmaskenerzeugungseinrichtung relativ zu einem Träger für das herzustellende Objekt bewegt werden, um die beschriebene Kanten- und Eckenglättung zu erreichen.

Auf besonders einfache Weise lässt sich eine Oszillationseinrichtung realisieren, wenn die Abbildungsoptik eine rotierende planparallele Scheibe umfasst, welche um eine zur Bauebene senkrechte oder im Wesentlichen senkrechte Rotationsachse rotierbar gelagert ist und eine Scheibenebene definiert, die mit der Rotationsachse einen von 90° abweichenden Winkel einschließt. Auf diese Weise ist es möglich, die Strahlung vor dem Auftreffen auf die Bauebene durch die beispielsweise relativ zur Bauebene gekippte planparallele Scheibe zu schicken, welche aufgrund ihrer Rotation insbesondere um die optische Achse der Abbildungsoptik zu einer Rotation der projizierten Strahlung und damit des projizierten Bildes der zu verfestigenden Objektschicht auf der Bauebene führt.

Vorteilhaft ist es, wenn die Belichtungsmaskenerzeugungseinrichtung ausgebildet ist zum Erzeugen einer einzigen Belichtungsmaske. Auf diese Weise kann das Objekts schneller und einfacher hergestellt werden.

Günstig ist es, wenn die Belichtungsmaskenerzeugungseinrichtung ausgebildet ist zum Erzeugen einer digitalen Belichtungsmaske. So ist es insbesondere möglich, nur mit zwei verschiedenen Bitwerten, beispielsweise einem ersten Bitwert, dem der Wert "durchlässig" zugeordnet wird, und einem zweiten Bit-wert, dem der Wert "nicht durchlässig" zugeordnet wird. Dabei sind "durchlässig" und nicht durchlässig nicht nur wörtlich zu verstehen, sondern auch so, dass der der Bitwert "durchlässig" eine höhere Strahlungsintensität in der Bauebene definiert als der Bitwert "nicht durchlässig".

Günstig ist es, wenn die Recheneinheit ausgebildet ist zum Berechnen einer einzigen Bitmap für jede Belichtungsmaske in Abhängigkeit der zu verfestigenden Objektschicht. So kann die Herstellung des Objekts insbesondere einfacher und schneller realisiert werden.

Vorzugsweise ist die Recheneinheit ausgebildet ist zum Berechnen einer Bitmap in Form einer 2-Bit-Bitmap für jede Belichtungsmaske in Abhängigkeit der zu verfestigenden Objektschicht. So kann insbesondere mit einem minimalen Rechenaufwand eine Belichtungsmaske berechnet werden.

Ferner ist es vorteilhaft, wenn die Belichtungsmaskenerzeugungseinrichtung eine Recheneinheit umfasst zum Berechnen einer einzigen 2-Bit-Bitmap für jede Belichtungsmaske in Abhängigkeit der zu verfestigenden Objektschicht, welche 2-Bit-Bitmap jedem Pixel der Belichtungsmaske entweder den Bit-Wert "durchlässig" oder den Bit-Wert "nicht durchlässig" zuordnet, zum Zuweisen des Bit-Werts "durchlässig" zu mindestens einem Flächenbereich der 2-Bit-Bitmap mit einer Strukturgröße unterhalb einer Grenzstrukturgröße und zum Zuweisen einer Belichtungstextur zu mindestens einem Flächenbereich oberhalb der Grenzstrukturgröße, welche Belichtungstextur in Form eines Musters von Pixeln mit dem Bit-Werten "durchlässig" und "nicht durchlässig" ausgebildet ist.

Die erfindungsgemäß weitergebildete Belichtungsmaskenerzeugungseinrichtung für eine Vorrichtung zum Herstellen eines dreidimensionalen Objekts durch schichtweises Verfestigen eines unter Einwirkung von Strahlung verfestigbaren Materials unter Verwendung von Belichtungsmasken ermöglicht es, mit einer einzigen Belichtungsmaske eine zu verfestigende Objektschicht des Objekts auszubilden, um den Energieeintrag in das Material in der Bauebene in Abhängigkeit der Flächenstruktur innerhalb einer Schicht, bzw. eines Belichtungszyklusses pro Schicht zu steuern. Die vorgeschlagene Erfindung ermöglicht es insbesondere, die Pixel mit dem Bit-Wert "durchlässig" mit der maximal verfügbaren Strahlungsintensität zu belichten, die erforderlich ist, um das zu verfestigende Material in gewünschter Weise zu verfestigen. Das bedeutet insbesondere, dass die Strahlungsintensität für Pixel mit dem Bit-Wert "durchlässig" abhängig von der Objektschicht variieren kann, jedoch vorzugsweise konstant ist oder insoweit konstant ist, wie dies die Strahlungsquelle ermöglicht. Wie bereits oben dargelegt, bedeutet der Bit-Wert "nicht durchlässig" nicht zwingend, dass gar keine Strahlung durchgelassen wird. Dies ist ein möglicher Sonderfall. Vielmehr repräsentieren die Bit-Werte "durchlässig" und "nicht durchlässig" zwei sich voneinander unterscheidende Durchlässigkeitswerte, wobei ein Pixel, dem der Bit-Wert "durchlässig" zugeordnet ist, mehr Strahlung durchlässt als ein Pixel, dem der Bit-Wert "nicht durchlässig" zugeordnet ist. Die vorgeschlagene 2-Bit-Bitmap ermöglicht es, in einem Flächenbereich mit den zugeordneten Belichtungstexturen den mittleren Strahlungseintrag zu reduzieren.

Vorzugsweise ist die Recheneinheit ausgebildet zum Zuweisen einer Belichtungstextur, welche in einem zu belichtenden Flächenbereich höchstens so viele Pixel mit dem Bit-Wert "nicht durchlässig" wie Pixel mit dem Bit-Wert "durchlässig" aufweist. Auf diese Weise kann insbesondere bei entsprechender Anordnung der Pixel erreicht werden, dass nicht zwei oder mehr Pixel mit dem Bit-Wert "nicht durchlässig" zur Ausbildung der Belichtungstextur nebeneinander liegen, was eine Stabilität des auszubildenden Objekts verringern könnte.

Vorteilhaft ist es, wenn die Recheneinheit ausgebildet ist zum Zuweisen einer Belichtungstextur, welche einen Belichtungsabschwächungswert aufweist, welcher größer als 0 ist und maximal 0,5 beträgt. Auf diese Weise ist es möglich, für einen bestimmten Flächenbereich, dem die Belichtungstextur zugewiesen wird, eine im Mittel aufgebrachte Strahlungsintensität entsprechend abzuschwächen. Dies kann insbesondere auch dazu dienen, Inhomogenitäten in der Intensitätsverteilung der von der Strahlungsquelle erzeugten Strahlung gezielt für bestimmte Flächenbereiche auszugleichen.

Ferner ist es günstig, wenn die Recheneinheit ausgebildet ist zum Zuweisen einer Belichtungstextur zu mindestens einem Flächenbereich mit einer Strukturgröße oberhalb der Grenzstrukturgröße in Abhängigkeit seiner Strukturgröße, wobei mit zunehmender Strukturgröße der Belichtungsabschwächungswert der Belichtungstextur zunimmt. Die Recheneinheit derart auszubilden hat den Vorteil, dass ein Strahlungseintrag in die jeweilige Fläche optimiert werden kann, um insbesondere Überbelichtungen zu vermeiden. Je größer zugeordnete, insbesondere zusammenhängende, Flächenbereiche sind, umso weniger Lichtintensität wird benötigt, um eine für die Ausbildung der jeweiligen Objektschicht erforderliche Verfestigung zu erreichen.

Gemäß einer weiteren bevorzugten Ausführungsform der Erfindung kann vorgesehen sein, dass die Recheneinheit ausgebildet ist zum versetzten Anordnen identischer Belichtungstexturen von Belichtungsmasken zur Belichtung aufeinanderfolgender Objektschichten in einer Ebene parallel zur Bauebene um eine ganzzahlige Pixelzahl relativ zueinander. Vorzugsweise werden die Belichtungstexturen relativ zueinander um 1 Pixel in einer x- und/oder y-Richtung der Ebene parallel zur Bauebene versetzt. Damit kann vermieden werden, dass insbesondere Pixel mit dem Bit-Wert "nicht durchlässig" bei aufeinanderfolgenden Objektschichten direkt übereinanderliegen, was eine Verminderung der Stabilität des dreidimensionalen Objekts zur Folge habe könnte.

Vorteilhaft ist es, wenn die Belichtungsmaskenerzeugungseinrichtung unterschiedliche Texturmuster zur Ausbildung der Belichtungstexturen bereitstellt, die ein Verhältnis von Pixeln mit dem Bit-Wert "nicht durchlässig" und von Pixeln mit dem Bit-Wert "durchlässig" aufweisen, die in einem Bereich zwischen 0 und 1 liegen. Werden entsprechende Texturmuster bereitgestellt, beispielsweise in einer Speichereinheit der Recheneinheit oder der Belichtungsmaskenerzeugungseinrichtung, so muss nicht jedes Mal eine Textur entsprechend dem angegebenen Pixelverhältnis errechnet werden, sondern das entsprechend gewünschte Texturmuster kann direkt ausgewählt und beispielsweise zur Ausfüllung eines Flächenbereichs der auszubildenden Objektschicht zur Generierung der Belichtungsmaske verwendet werden.

Auf besonders einfache Weise lassen sich Belichtungstexturen speichern, wenn die Belichtungsmaskenerzeugungseinrichtung jede Belichtungstextur in Form einer Schraffur oder eines regelmäßigen Musters bereitstellt. Derartige Schraffuren oder regelmäßige Muster lassen sich auf einzelne sich innerhalb des Musters wiederholende Grundmuster zurückführen, so dass der hierfür benötigte Speicherplatz minimiert und das Ausfüllen von Flächenbereichen zeitlich optimiert werden kann.

Günstig kann es ferner sein, wenn die Recheneinheit ausgebildet ist zum ausschließlichen Verwenden von Belichtungstexturen, bei denen allenfalls Ecken von Pixeln mit dem Bit-Wert "nicht durchlässig" aufeinandertreffen, jedoch keine Längskanten von Pixeln mit dem Bit-Wert "nicht durchlässig" aneinander angrenzen. So kann vermieden werden, dass eine Belichtungstextur zwei direkt aneinander angrenzende Pixel mit dem Bit-Wert "nicht durchlässig" aufweist, was eine Stabilität des dreidimensionalen Objekts herabsetzen könnte.

Die Belichtungsmaskenerzeugungseinrichtung lässt sich auf besonders einfache Weise ausbilden, wenn die Belichtungsmaskenerzeugungseinrichtung ausgebildet ist zum Bereitstellen von Belichtungstexturen, welche durch eine Translation in einer Ebene parallel zur Bauebene in sich selbst überführbar sind. Wie bereits dargelegt, können so einzelne Texturelemente, die eine minimale Pixelzahl umfassen, als Texturmuster gespeichert und durch entsprechende Translation zur Ausfüllung von vorab bestimmten Flächenbereichen dienen, wodurch auf einfache Weise eine Belichtungsmaske generierbar ist.

Vorzugsweise wird die Translation durch einen Vektor definiert, welcher eine Länge aufweist, die n Pixeln in einer x-Richtung und m Pixeln in einer zur x-Richtung nicht parallelen y-Richtung entspricht, wobei n und m ganze Zahlen sind. Beispielsweise kann zu jedem Grundmuster einer Textur ein zugehöriger Vektor mitdefiniert und gespeichert werden, mit welchem in Verbindung mit dem Grundmuster der Textur ein vorab ermittelter Flächenbereich der Belichtungsmaske mit dem Texturmuster ausgefüllt werden kann.

Günstigerweise ist die Belichtungsmaskenerzeugungseinrichtung ausgebildet zum Bereitstellen von Belichtungstexturen, welche pixelweise gerastert sind. Auf diese Weise lassen sich bestimmte Flächenbereiche der Belichtungsmaske auf einfache Weise mit bestimmten Belichtungstexturen ausfüllen.

Gemäß einer weiteren bevorzugten Ausführungsform der Erfindung kann vorgesehen sein, dass die Belichtungsmaskenerzeugungseinrichtung ausgebildet ist zum Zuweisen einer geschlossenen Randlinie zu jeder Belichtungsfläche, welche eine Querschnittsfläche des Objektes definiert, wobei jeder Belichtungsmaske für jede Aussen- und Innenkontur der Belichtungsfläche jeweils eine geschlossene Randlinie (56) zugewiesen ist und dass den die Randlinie ausbildenden Pixeln der Bit-Wert "durchlässig" zugewiesen ist. Eine solche Randlinie vorzusehen hat den Vorteil, dass die Oberflächengüte des Bauteils erhöht wird.

Um eine Randlinie mit hinreichender Stabilität zu generieren, ist es vorteilhaft, wenn eine Breite der Randlinie mindestens zwei Pixel beträgt. Vorzugsweise liegt die Breite der Randlinie in einem Bereich von 2 bis 8 Pixeln, insbesondere in einem Bereich von 2 bis 4 Pixeln. So können insbesondere auch noch kleine Strukturen, das heißt Strukturen mit einer minimalen Abmessung in einem Bereich von nur wenigen Pixeln, mit einer entsprechenden Randlinie versehen werden.

Vorteilhaft ist es, wenn die Belichtungsmaskenerzeugungseinrichtung ausgebildet ist zum Zuordnen einer individuellen Belichtungszeit zu jeder Belichtungsmaske. Dies ermöglicht es beispielsweise, für jede zu erstellende Objektschicht abhängig von der Belichtungsmaske und insbesondere der Art und Form der zu belichtenden Fläche, die Belichtungszeit individuell zu wählen. Dies gestattet es, jede Objektschicht lediglich mit der zum Aushärten des Materials erforderlichen Mindestbelichtungszeit zu belichten, was insgesamt die Herstellungszeit für das dreidimensionale Objekt minimiert.

Die Vorrichtung kann auf besonders einfache Weise ausgebildet werden, wenn die Belichtungsmaskenerzeugungseinrichtung ausgebildet ist zum Zuordnen einer identischen Belichtungszeit für alle Belichtungsmasken. Auf diese Weise kann auf eine Belichtungszeitsteuerung beziehungsweise eine individuelle Belichtungszeitberechnung für die jede Belichtungsmaske verzichtet werden, was die Bereitstellung der jeweiligen Belichtungsmasken vereinfacht.

Vorteilhaft ist es, wenn die Belichtungsmaskenerzeugungseinrichtung ausgebildet ist zum Zuweisen einer in sich geschlossenen äußeren Konturlinie zur Begrenzung einer Belichtungsfläche, welche eine Querschnittsfläche des Objektes definiert und zum Zuweisen einer innen an die Konturlinie angrenzenden Trennlinie zu jeder Belichtungsmaske, wobei den Pixeln zur Ausbildung der Konturlinie der Bit-Wert "durchlässig" und den Pixeln zur Ausbildung der Trennlinie der Bit-Wert "nicht durchlässig" zugewiesen ist. Wie bereits oben beschrieben, kann es sich auch um eine geschlossene innere Konturlinie handeln, die eine Ausnehmung, also einen nicht zu belichtenden Bereich der zu verfestigenden Objektschicht, begrenzt, wobei dann die angrenzende Trennlinie die Konturlinie außen umgibt. Es können auch mehrere derartige Konturlinien vorgesehen sein, die durch Trennlinien voneinander getrennt sind. Das Vorsehen von Trennlinien hat den Vorteil, dass auf einfache Weise ein Überstrahlen von Außen- und Innenkonturen vermieden werden kann, welche eine Oberflächenqualität der auszubildenden Objektschicht und damit des Objekts insgesamt beeinträchtigen können. Selbstverständlich kann jede Trennlinie auch durch entsprechende Verbindungslinien oder "Verbindungsstege" unterbrochen sein, die beispielsweise die Konturlinie mit der Randlinie verbinden und so die Trennlinie unterbrechen. Dies kann aus Stabilitätsgründen wünschenswert sein, um den Zusammenhalt des Objekts insgesamt gewährleisten zu können.

Damit die Trennlinie den gewünschten Effekt bewirken kann, ist es vorteilhaft, wenn eine Breite der Konturlinie und/oder der Trennlinie mindestens 2 Pixel beträgt. Günstigerweise liegt die Breite in einem Bereich von 2 bis 8 Pixeln. Vorzugsweise liegt eine Breite der genannten Linien in einem Bereich von 2 bis 4 Pixeln.

Gemäß einer weiteren bevorzugten Ausführungsform der Erfindung kann vorgesehen sein, dass die Belichtungsmaskenerzeugungseinrichtung ausgebildet ist zum Zuweisen einer Trennlinie zu einer Belichtungsmaske für diejenigen Flächenbereiche derselben, deren Strukturgröße eine Breite und/oder Länge aufweist, welche mindestens doppelt so groß ist wie eine Breite der Konturlinie. So kann sichergestellt werden, dass Trennlinien nur Flächenbereichen mit hinreichend großen Strukturgrößen zugeordnet werden können. Damit kann eine ausreichende Aushärtung insbesondere von filigranen Strukturen gewährleistet werden.

Die eingangs gestellte Aufgabe wird ferner bei einer Vorrichtung zum Herstellen eines dreidimensionalen Objekts der eingangs beschriebenen Art erfindungsgemäß dadurch gelöst, dass die Belichtungsmaskenerzeugungseinrichtung in Form einer der oben beschriebenen bevorzugten Ausführungsformen von Belichtungsmaskenerzeugungseinrichtungen ausgebildet ist. So kommen auch der Vorrichtung zum Herstellen eines dreidimensionalen Objekts die oben im Zusammenhang mit bevorzugten Ausführungsformen von Belichtungsmaskenerzeugungseinrichtungen beschriebenen Vorteile zu. Insbesondere lassen sich so bereits am Markt verfügbare Vorrichtungen zum Herstellen eines dreidimensionalen Objekts mit einer erfindungsgemäßen Belichtungsmaskenerzeugungseinrichtung nachrüsten.

Günstigerweise ist die Strahlungsquelle ausgebildet zum Erzeugen von Strahlung in Form von elektromagnetischer Strahlung oder Teilchenstrahlung. Dies ermöglicht es, abhängig von dem zu verfestigenden Material, beispielsweise einem Kunstharz oder einem Präpolymer, die hierfür ideal geeignete Strahlungsquelle einzusetzen. Insbesondere kann abhängig von einem erforderlichen Energieeintrag zur Verfestigung des Materials eine entsprechende Strahlungsquelle mit hinreichender Strahlungsintensität gewählt werden.

Die eingangs gestellte Aufgabe wird ferner gelöst durch die Verwendung einer Vorrichtung zum Herstellen eines dreidimensionalen Objekts durch schichtweises Verfestigen eines unter Einwirkung von Strahlung verfestigbaren Materials unter Verwendung von Belichtungsmasken, wie sie oben beschrieben wurden, zur Durchführung eines Verfahrens zum Herstellen eines dreidimensionalen Objekts durch schichtweises Verfestigen eines unter Einwirkung von Strahlung verfestigbaren Materials unter Verwendung von Belichtungsmasken, wie sie ebenfalls oben beschrieben wurden.

Die nachfolgende Beschreibung dient im Zusammenhang mit den Zeichnungen der näheren Erläuterung. Es zeigen:
- Figur 1:: eine schematische Darstellung eines Teils einer Vorrichtung zum Herstellen eines dreidimensionalen Objekts;
- Figur 2:: eine schematische Ansicht eines weiteren Teils einer Vorrichtung zum Herstellen eines dreidimensionalen Objekts;
- Figur 3:: eine schematische Ansicht eines weiteren Teils eines zweiten Ausführungsbeispiels einer Vorrichtung zum Herstellen eines dreidimensionalen Objekts;
- Figur 4:: eine schematische Darstellung eine Belichtungsmaske mit einer Belichtungstextur;
- Figur 5:: eine schematische Darstellung der Durchhärtetiefe mit und ohne Belichtungstextur;
- Figur 6:: eine schematische Darstellung der Intensitätsverteilung der Strahlung nach der Erzeugung und beim Auftreffen auf die Bauebene im Flächenbereich einer Belichtungstextur, hier Schachbrettmuster auf Pixelniveau;
- Figur 7:: eine schematische Darstellung verschiedener Texturmuster mit zugeordnetem Belichtungsabschwächungswert in Prozent;
- Figur 8:: eine schematische Schnittdarstellung identischer Texturmuster von Belichtungsmasken zur Belichtung aufeinanderfolgender Objektschichten;
- Figur 9:: eine schematische Darstellung der Auswahl einer Belichtungsmaske mit unterschiedlichen Texturmustern in Abhängigkeit unterschiedlicher identifizierter (Grenz-)Strukturgrößen innerhalb einer zu belichtenden Fläche in der auszubildenden Objektschicht;
- Figur 10:: eine schematische Darstellung der Intensitätsverteilung einer Strahlungsquelle;
- Figur 11:: eine schematische Darstellung einer Belichtungsmaske unter Berücksichtigung der Intensitätsverteilung der Strahlungsquelle;
- Figur 12:: eine schematische Darstellung einer Belichtungsmaske ohne Berücksichtigung der Intensitätsverteilung der Strahlungsquelle;
- Figur 13:: eine schematische Darstellung einer Belichtung einer Kreisscheibe mit schematischer dargestelltem Streulicht im Randbereich;
- Figur 14:: eine schematische Ansicht analog Figur 13, jedoch unter Einsatz einer äußeren Konturlinie mit daran angrenzender Trennlinie und schematischer Darstellung einer Verringerung des Streulichts;
- Figur 15:: eine schematische Darstellung einer kreisförmigen Oszillation einer Belichtungsmaske im Subpixelbereich;
- Figur 16:: eine vergrößerte Ansicht des Bereichs A in Figur 15; und
- Figur 17:: eine schematische Darstellung eines weiteren Ausführungsbeispiels einer Oszillationseinrichtung.

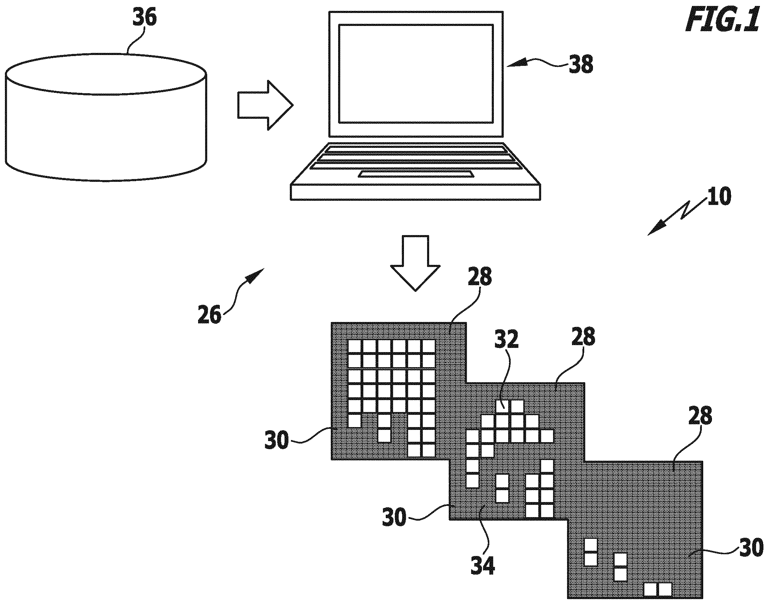

Der schematische Aufbau einer Vorrichtung 10 zum Herstellen eines dreidimensionalen Objekts durch schichtweises Verfestigen eines unter Einwirkung von Strahlung 14 verfestigbaren Materials 16 ist schematisch in den Figuren 1 bis 3 für zwei verschiedene Aufbauvarianten dargestellt.

Die Vorrichtung 10 umfasst eine Strahlungsquelle 18, welche eine Abbildungsoptik 20 zum Abbilden eines Objektschichtbildes in eine Bild-/Bauebene 22 umfasst. Von der Abbildungsoptik 20 umfasst ist eine Maskeneinheit 24, welche durch eine Belichtungsmaskenerzeugungseinrichtung 26 ansteuerbar ist. Mit der Belichtungsmaskenerzeugungseinrichtung 26 kann für jede Objektschicht des Objekts 12 eine Belichtungsmaske 28 generiert werden, und zwar in Form eines 2-Bit-Bitmaps 30. Jede 2-Bit-Bitmap 30 weist also lediglich zwei Bit-Werte 32 und 34 auf, wobei der Bit-Wert 32 eine größere Durchlässigkeit für die Strahlung 14 ermöglicht als der Bit-Wert 34. Im Extremfall kann der Bit-Wert 32 für die Strahlung 14 vollständig "durchlässig" sein, der Bit-Wert 34 für die Strahlung 14 vollständig "nicht durchlässig". In jedem Fall ist die Durchlässigkeit der Pixel der 2-Bit-Bitmap 30 mit dem Bit-Wert 32 größer als die Durchlässigkeit der Pixel mit dem Bit-Wert 34.

Die Belichtungsmaskenerzeugungseinrichtung 26 umfasst ferner eine Speichereinrichtung 36, welche beispielsweise gespeicherte native Informationen für die auszubildenden Objektschichten des auszubildenden Objekts 12 enthalten kann. Diese können insbesondere auf einen Computer 38 oder eine andere hierfür geeignete Recheneinrichtung übertragen werden. In Abhängigkeit der Schichtinformationen wird mit dem Computer 36 eine 2-Bit-Bitmap 30 berechnet, die dann auf die Maskeneinheit 24 übertragen wird, um beispielsweise ein LCD-Display bei Belichtung in Transmission oder eine digitale Mikrospiegeleinrichtung ansteuern, um so die von der Strahlungsquelle 18 erzeugte Strahlung 14 entsprechend der auszubildenden Objektschicht auf die Bild-/Bauebene 22 abzubilden. In der Bild-/Bauebene 22 trifft die Strahlung 14 auf noch unverfestigtes, viskoses Material 16, das durch den Energieeintrag durch Belichtung nach einer bestimmten Zeit verfestigt wird. Für jede Objektschicht kann eine individuelle Belichtungszeit vorgegeben werden, so dass beispielsweise die Maskeneinheit 24 die Strahlung 14 vollständig zurückhält, wenn keine Objektschicht ausgebildet werden soll, und die Strahlung 14 selektiv durchlässt, wenn eine Objektschicht ausgebildet werden soll.

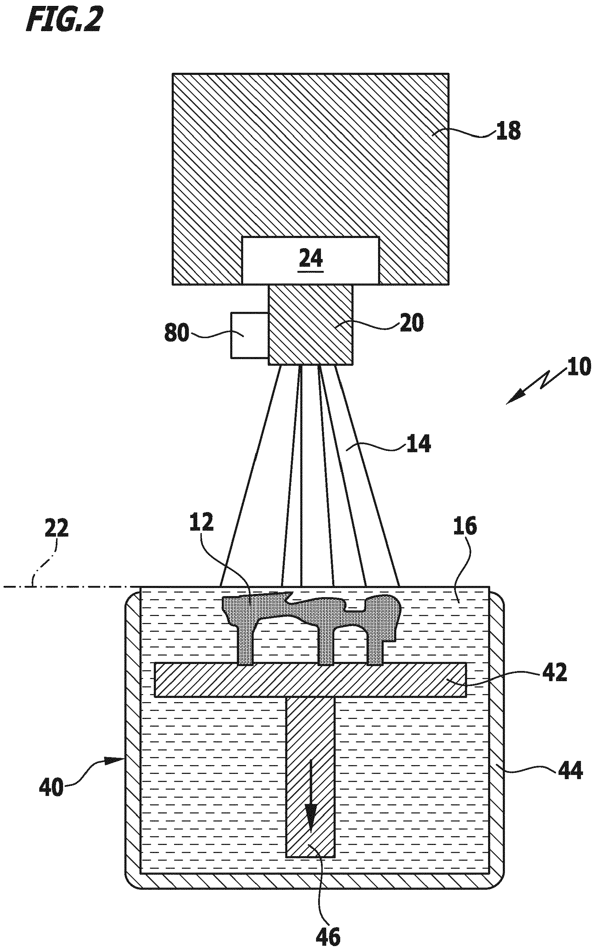

Zur Ausbildung von Objekten 12 kommen insbesondere zwei Arten von Trägersystemen 40 zum Einsatz. Bei der in Figur 2 schematisch dargestellten Variante befindet sich eine Trägerplatte 42 in einem mit dem Material 16 befüllten Behälter 44. Die Trägerplatte 42 ist mit einer Antriebseinrichtung 46 in den Behälter 44 hinein bewegbar, vorzugsweise in vorgegebenen, diskreten Schritten, die immer dann vollzogen werden, wenn eine weitere Objektschicht durch Aushärten des Materials an der Oberfläche des bereits teilweise ausgebildeten Objekts 12 verfestigt ist und so eine weitere Objektschicht bildet.

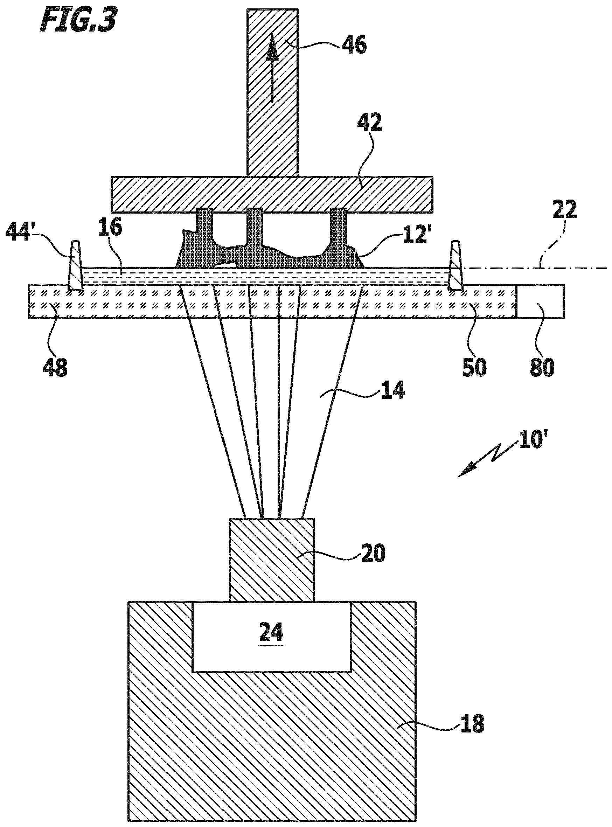

Alternativ kann, wie in Figur 3 dargestellt, die Strahlung 14 auch durch eine strahlungsdurchlässige Platte 48, die einen Boden 50 des alternativen Behälters 44' bildet, in die Bild-/Bauebene 22 abgebildet werden. Die auszubildende Objektschicht entsteht ebenfalls durch Energieeintrag in der Bild-/Bauebene 22, und zwar unter der zuletzt ausgebildeten Objektschicht. Ist eine Objektschicht ausgehärtet, wird mittels der Antriebseinheit 46 das bereits ausgebildete Objekt 12 in vorgegebener Weise ein Stück, insbesondere eine Strecke, die einer Dicke der neu ausgebildeten Objektschicht entspricht, vom Behälter 44 weg bewegt, also quasi etwas aus diesem herausgezogen. Nun kann in einem nächsten Schritt die nächste Objektschicht durch Belichtung des Materials 16 in der Bild-/Bauebene 22 hergestellt werden.

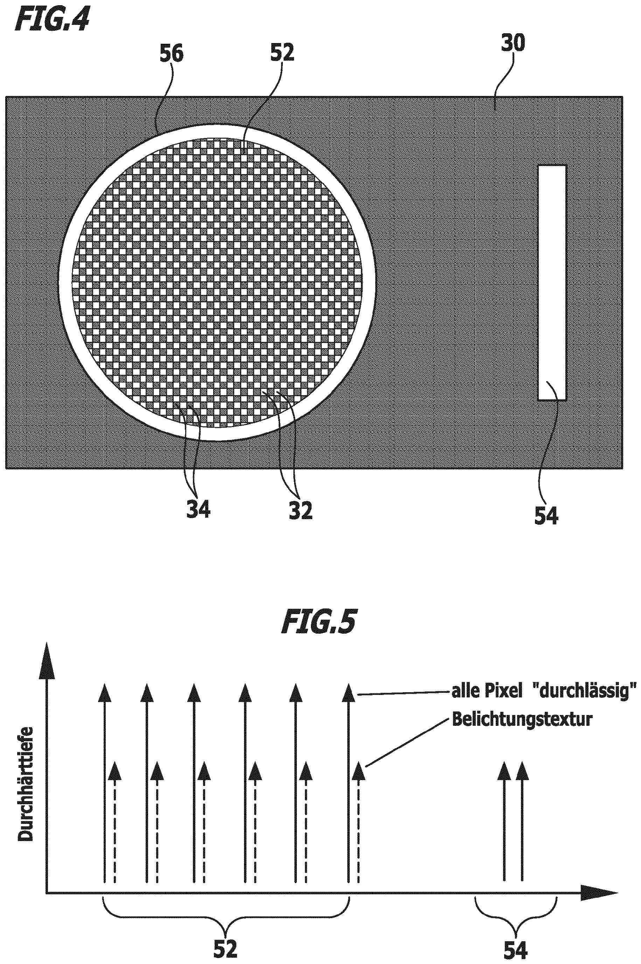

Die Belichtungsmaskenerzeugungseinrichtung 26 ermöglicht es ferner, nicht nur einfache 2-Bit-Bitmaps zu generieren zur Steuerung der Maskeneinheit 24, bei denen zu verfestigende Pixel in der auszubildenden Objektschicht der Bit-Wert 32 zugeordnet und allen anderen Pixeln der Bit-Wert 34 zugeordnet wird. Vielmehr ist es optional auch möglich, mit der Belichtungsmaskenerzeugungseinrichtung 26 das eingangs genannte Problem der Überbelichtung von großflächigen Bereichen zu vermeiden. Um also filigrane und großvolumige Strukturen nebeneinander bei der Ausbildung einer Objektschicht mit gleich guter Qualität herstellen zu können, wird erfindungsgemäß vorgeschlagen, Flächenbereiche des Objekts 12 mit einer Größe oberhalb einer Grenzstrukturgröße mit einer Belichtungstextur 52 auszufüllen. In Figur 4 ist diese Vorgehensweise schematisch dargestellt. Eine filigrane Struktur 54 ist in der in Figur 4 schematisch dargestellten 2-Bit-Bitmap 30 in Form eines langgestreckten schmalen Rechtecks rechts dargestellt.

In der 2-Bit-Bitmap 30 ist links eine im Vergleich zum langgestreckten schmalen Rechteck relativ große Kreisfläche dargestellt, die außen von einer in sich geschlossenen Konturlinie 56 begrenzt ist. Die Kreisfläche ist jedoch nicht vollständig durch Pixel mit dem Bit-Wert 32 "durchlässig" befüllt, sondern mit einer Belichtungstextur 52. Diese ist aus einzelnen Pixeln mit den beiden einzig verfügbaren Bit-Werten 32 "durchlässig" und 34 "nicht durchlässig" zusammengesetzt. Die Belichtungstextur 52 wird vorzugsweise realisiert in Form eines regelmäßigen Musters, welches auf Pixelniveau gerastert ist. Die Rasterung ist inbesondere so gestaltet, dass lediglich Belichtungstexturen zum Einsatz kommen, bei denen allenfalls Ecken von Pixeln mit dem Bit-Wert 34 "nicht durchlässig" aufeinandertreffen, jedoch keine Längskanten von Pixeln mit dem Bit-Wert 34 "nicht durchlässig" aneinander angrenzen. Die in Figur 4 beispielhaft dargestellte Belichtungstextur 52 entspricht genau dieser Vorgabe. Sie zeigt ein schachbrettartiges Muster, bei dem jeweils Pixel mit den Bit-Werten 32 "durchlässig" und 34 "nicht durchlässig" abwechseln angeordnet sind. Um die Stabilität des Objekts 12 zu gewährleisten, ist die Konturlinie 56 mit einer Breite vorgesehen, die vorzugsweise in einem Bereich von 2 bis 8 Pixeln liegt. Insbesondere kann sie auch nur 2 bis 4 Pixel breit sein.

Ein Effekt, den ein Einsatz der in Figur 4 dargestellten Belichtungsmaske 30 hat, ist schematisch in Figur 5 dargestellt. Bei einer vorgegebenen festen Belichtungszeit wird für die filigrane Struktur 54 die in Figur 5 rechts schematisch mit Pfeilen dargestellte Durchhärtetiefe erreicht. Würde die kreisförmige Fläche vollständig belichtet, ergebe sich über den großen Flächenbereich eine deutlich größere Durchhärtetiefe. Dies ist im Schaubild in Figur 5 durch die durchgezogenen Pfeile symbolisiert. Um hier einen Ausgleich zu schaffen, dient die Belichtungstextur 52, die aufgrund des niedrigeren Energieeintrags die Durchhärtetiefe für die größere Struktur im Mittel reduziert. So ist es möglich, durch entsprechende Wahl von Belichtungstexturen 52 gleichzeitig filigrane Strukturen 54 und großflächigere Strukturen mit einer einzigen Belichtungsmaske in einem einzigen Belichtungsvorgang für eine insbesondere minimale Belichtungszeit t zu belichten.

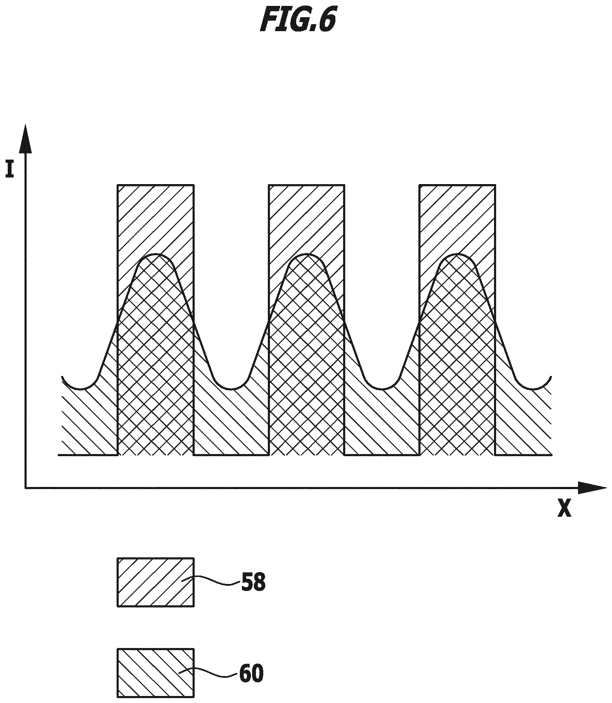

Ein Gesamtsystem der Abbilung umfassend insbesondere die Abbildungsoptik 20, das Material 16 und gegebenenfalls die strahlungsdurchlässige Platte 48 definiert eine Übertragungsfunktion für die Intensität in Abhängigkeit des Orts x. In Figur 6 ist schematisch mit der Schraffur 58 die Intensitätsverteilung beispielsweise direkt nach einem Mikrospiegeleinheit beziehungsweise einer LCD-Durchlichtmaske dargestellt. Aufgrund der Übertragungsfunktion des Gesamtsystems ergibt sich eine Intensitätsreduzierung sowie eine verschmierte Intensitätsverteilung in der Bauebene, die mit der Schraffur 60 gekennzeichnet ist. Mit anderen Worten bedeutet dies, dass ein Pixel-Linien-Paar von dem Gesamtsystem aufgrund optischer Fehler nur mit einer Modulationsübertragungsfunktion kleiner als 50% abgebildet werden kann.

Die wie beschrieben den großen Flächenbereich umgebende Konturlinie 56 hat insbesondere den Vorteil, dass das Objekt 12 insgesamt eine glatte, scharfe Oberfläche aufweisen kann.

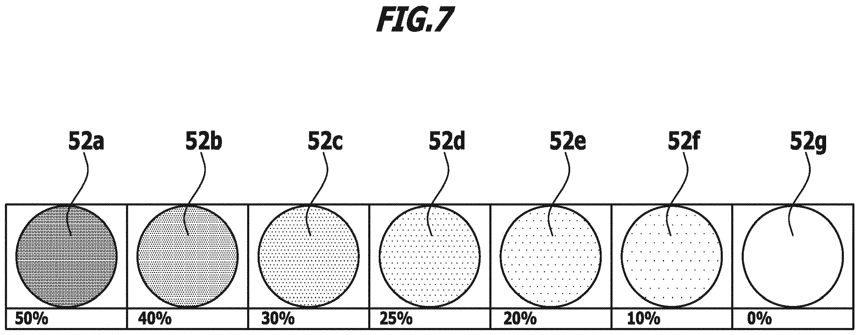

Die verwendeten Belichtungstexturen 52 können insbesondere so gestaltet werden, dass insgesamt unterschiedliche, sogenannte "Füllgrade" entstehen. Insbesondere ist darunter zu verstehen, dass der jeweilige "Füllgrad" einem Belichtungsabschwächungswert entspricht, welcher ein Maß dafür ist, um wie viel der gesamte Energieeintrag in eine Fläche abgeschwächt wird. Die in Figur 7 schematisch dargestellten Flächenmuster 52a bis 52g repräsentieren entsprechende Belichtungsabschwächungswerte, die zu jeder Belichtungstextur 52a bis 52b beispielhaft als Prozentangabe angegeben sind. Die jeweilige Prozentzahl gibt somit den Anteil der Pixel mit dem Bit-Wert 34 "nicht durchlässig" in der jeweiligen Belichtungstextur 52a bis 52g an.

Vorteilhaft ist es, wenn die Pixel mit dem Bit-Wert 34 "nicht durchlässig" gleichmäßig in der jeweiligen Belichtungstextur 52a bis 52g verteilt sind. Vorzugsweise sind die Pixel mit dem Bit-Wert 34 "nicht durchlässig" jeweils einzeln angeordnet, das heißt längs ihren Längskanten grenzen diese stets an Pixel an, denen der Bit-Wert 32 "durchlässig" zugeordnet ist. Eine solche Ausbildung von Belichtungstexturen 52a bis 52g hat insbesondere den Vorteil, dass eine Intensitätsverteilung der Strahlung 14 in der Bild-/Bauebene 22 durch die beschriebene optische Übertragungsfunktion des Gesamtsystems homogenisiert und gemittelt wird. Mit anderen Worten werden auch große Flächenbereiche, obwohl sie mit einer Belichtungstextur 52 gefüllt sind, in gewünschter Weise belichtet und erreichen die erforderliche Durchhärtetiefe, die auch für filigrane Strukturen 54 erreicht wird.

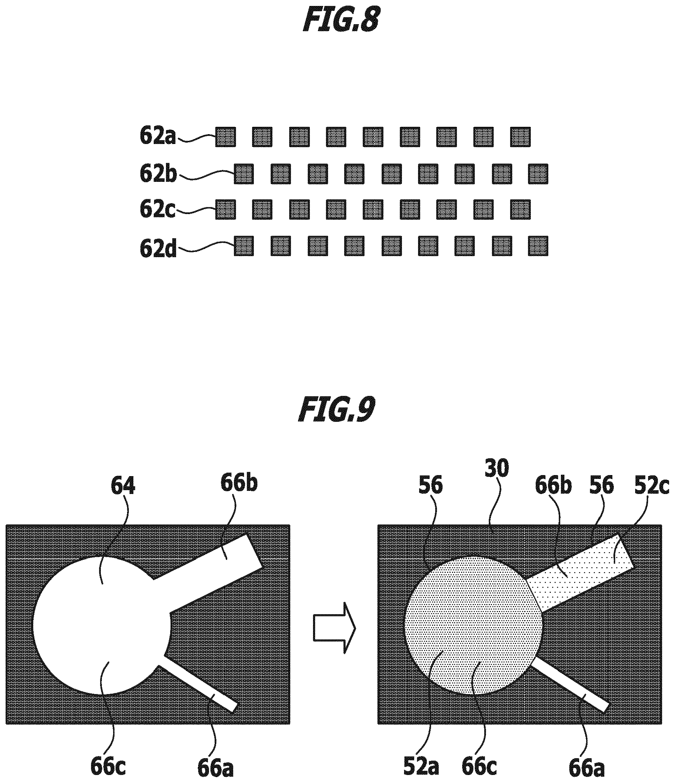

Um die Stabilität des Objekts 12 insgesamt zu erhöhen, werden vorzugsweise Belichtungstexturen 52 von Belichtungsmasken 30 zur Belichtung aufeinanderfolgender Objektschichten in einer Ebene parallel zur Bild-/Bauebene 22 um eine ganzzahlige Pixelzahl relativ zueinander versetzt angeordnet, und zwar vorzugsweise um 1 Pixel. Dies ist schematisch in Figur 8 für die Objektschichten 62a bis 62d dargestellt, wobei jede der Objektschichten 62a bis 62d, einer Belichtungsfläche entspricht, die von einer Belichtungsmaske 30 definiert wird.

Komplexe Querschnittsflächen von Objekten 12, wie in Figur 9 links schematisch dargestellt, können in unterschiedlich große Flächenbereiche 66a, 66b und 66c unterteilt werden. Die Flächenbereiche 66b und 66c sind bei dem in Figur 9 dargestellten schematischen Beispiel größer als beispielsweise eine vorgegebene Grenzstrukturgröße. Der Flächenbereich 66a ist entsprechend kleiner als die vorgegebene Grenzstrukturgröße. Daher wird der Flächenbereich 66a, der eine filigrane Struktur bildet, nicht mit einer Belichtungstextur gefüllt, sondern es wird eine Bitmap 30, wie beispielhaft in Figur 9 rechts dargestellt, gewählt, in welcher der Flächenbereich 66a vollständig mit Pixeln mit dem Bit-Wert 32 "durchlässig" gefüllt ist. Die Flächenbereiche 66b und 66c werden vorzugsweise mit einer äußeren Randlinie 56 vollständig umgeben, die idealerweise eine Breite von mindestens 2 Pixeln aufweist. Um eine möglichst homogene Intensitätsverteilung sowie eine möglichst homogene Durchhärtetiefe für alle Flächenbereiche der auszubildenden Objektschicht zu erreichen, wird beispielsweise der Flächenbereich 66b mit der Belichtungstextur 52e gefüllt, der Flächenbereich 66c mit der Belichtungstextur 52c. Damit wird der Energieeintrag vom Flächenbereich 66b im Mittel um 20% abgesenkt, der Energieeintrag im Flächenbereich 66c im Mittel um 50%.

Selbstverständlich kann in analoger Weise auch bei noch komplexeren Querschnittsflächen des Objekts 12 die Aufteilung in Flächenbereiche noch weiter verfeinert und entsprechend deren Größe die passende Belichtungstextur 52 gewählt werden, um eine möglichst homogene Verteilung für die Durchhärtetiefe zu erreichen.

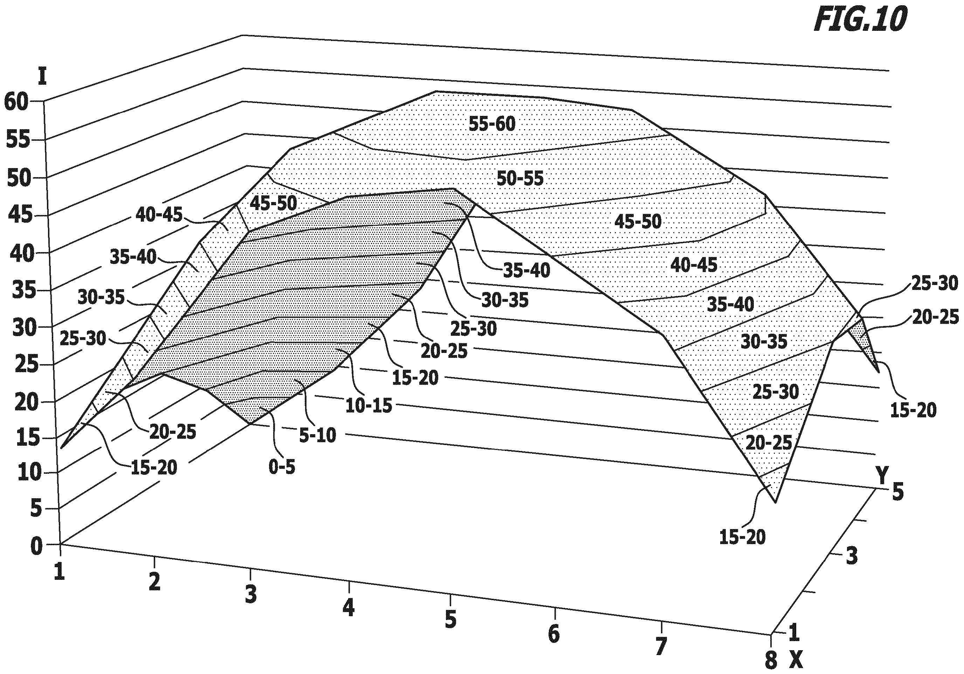

Des Weiteren ist, wie bereits eingangs erwähnt, ein zu lösendes Problem eine inhomogene Intensitätsverteilung der von der Strahlungsquelle 18 erzeugten Strahlung 14. Wird beispielsweise nur ein zentraler Bereich eines Baufeldes in der Bild-/Bauebene 22 genutzt, so ergibt sich in einer Ebene parallel zur Bild-/Bauebene 22 beispielsweise eine Intensitätsverteilung wie in Figur 10 schematisch dargestellt. Im Zentrum des Baufeldes ist damit die Intensität der Strahlung 14 am höchsten. Die Intensität der Strahlung nimmt jedoch zum Rand des Baufeldes kontinuierlich ab. In Figur 10 ist schematisch auf der Hochachse die Intensität aufgetragen, die Ausdehnung in einer Ebene parallel zur Bild-/Bauebene 22 des Strahlungsfeldes bildet eine x-y-Ebene.

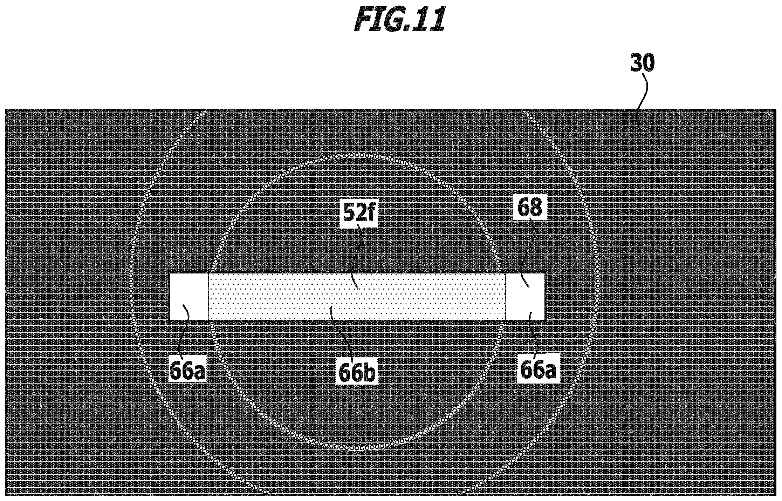

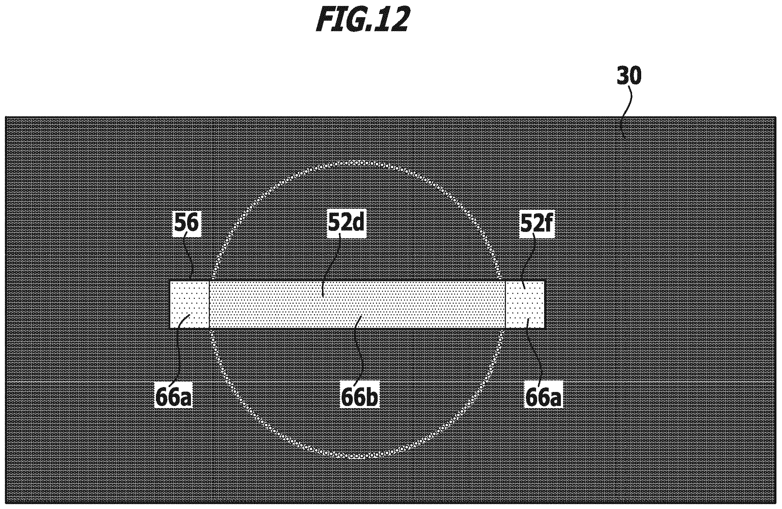

Wenn beispielsweise zur Ausbildung einer Objektschicht nur der mittlere Bereich des Baufeldes genutzt wird, welcher mit dem Bereich der maximalen und gleichmäßigsten Intensitätsverteilung der Strahlung 14 übereinstimmt, muss dieser Bereich folglich nicht auf den niedrigsten Intensitätswert, der sich in der Regel in den Ecken des Strahlungsfeldes befindet, gedrückt werden. Auf diese Weise kann wertvolle Belichtungszeit gewonnen und damit die Bauzeit zur Ausbildung des Objekts 12 reduziert werden. Mit einer entsprechenden Bildverarbeitungssoftware, die auf dem Computer 38 abläuft, kann dann individuell für jede Objektschicht eine Belichtungsmaske durch die berechnete 2-Bit-Bitmap 30 angesteuert werden, die mit den kleinsten Belichtungsabschwächungswerten auskommt, um die jeweilige Querschnittsfläche des Objekts in der kürzesten Zeit zu belichten. Dieser Effekt ist in den Figuren 11 und 12 schematisch dargestellt.

In Figur 11 wird berücksichtigt, dass die zu belichtende Struktur 68 ausschließlich im Bereich der beiden höchsten Intensitätsstufen, welche durch die gepunkteten Kreise symbolisiert sind, belichtet wird. Daher wird das Niveau der Belichtung angepasst auf die niedrigste dieser beiden Intensitätsstufen. Das heißt, dass den Flächenbereichen 66a Pixel mit dem Bit-Wert 32 "durchlässig" zugeordnet werden können, und lediglich der Flächenbereich 66b, welcher sich im Bereich des Strahlungsfeldes mit der höchsten Intensität im Bereich zwischen 55 und 60 befindet, durch Ausfüllen beispielsweise mit der Belichtungstextur 52f um 10% abgeschwächt wird.

Im Gegensatz hierzu ergibt sich für die Belichtungsmaske 30 in Figur 12, wenn die Belichtung auf Ecken des Bildfeldes abgestimmt wird, beispielsweise die Belichtungstextur 52f für die Flächenbereiche 66a und die Belichtungstextur 52d für den Flächenbereich 66b. Mit anderen Worten fällt ohne die Berücksichtigung, dass lediglich im Zentrum des von der Strahlungsquelle 18 erzeugten Strahlungsfeldes eine Belichtung stattfindet, eine Abdunkelung deutlich größer aus, wodurch sich die Belichtungszeit dieser Objektschicht signifikant erhöht, bei den in den Figuren 11 und 12 schematisch dargestellten Marken 30 beispielsweise um 20%.

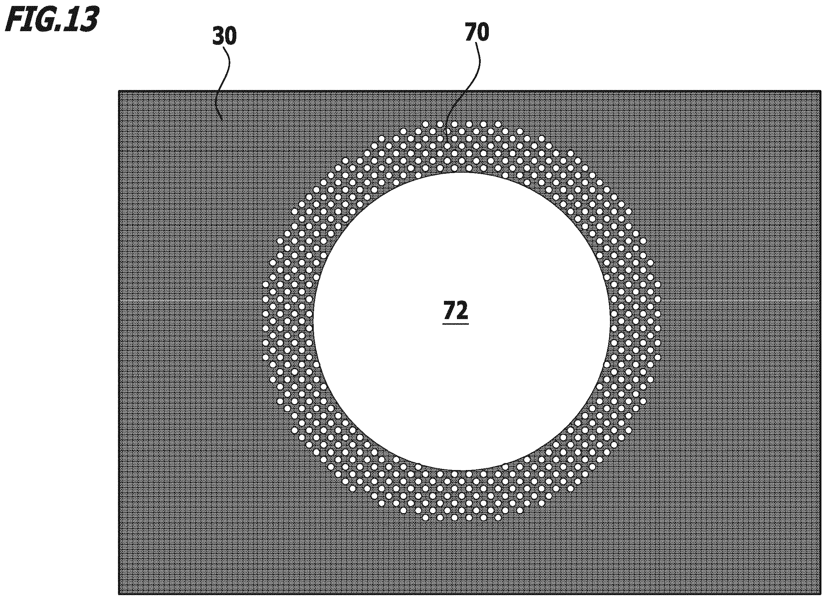

Um eine Oberflächenqualität des Objekts 12 zu verbessern, ist es vorteilhaft, wenn insbesondere auch Streulichteffekte im Randbereich von Strukturen berücksichtigt werden. Wird eine kreisförmige Struktur 72 beispielsweise vollständig belichtet, also allen Pixeln der zugehörigen 2-Bit-Bitmap 30 der Bit-Wert 32 "durchlässig" zugeordnet, ergeben sich im Randbereich starke Streulichteffekte wie schematisch in Figur 13 dargestellt. Das Streulicht 70 umgibt die kreisförmige Struktur 72 in der Art einer Korona und führt zu undefinierten Randbereichen der Belichtung.

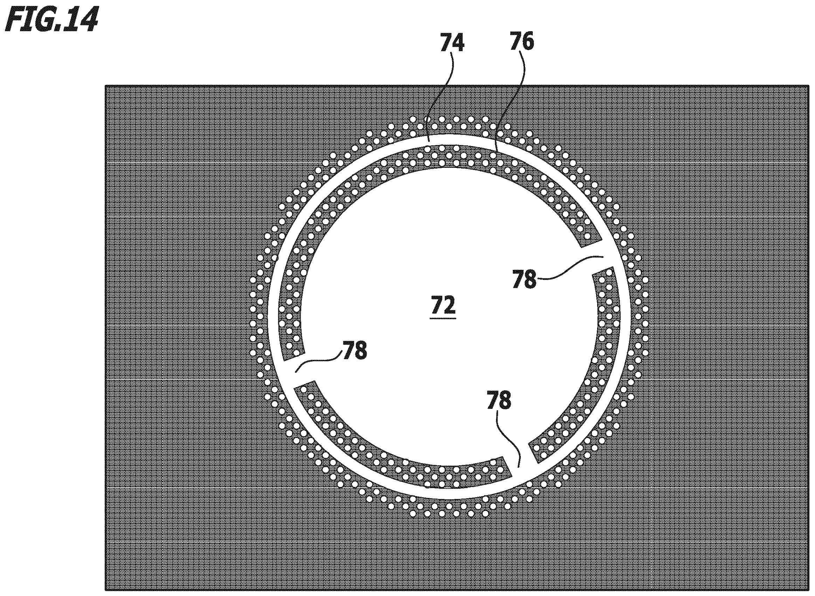

Um diese Nachteile auszugleichen, wird eine Konturlinie 74, die den jeweiligen Querschnitt der Struktur 72 außen begrenzt, durch eine Trennlinie 76 vom Rest der flächigen Struktur abgetrennt. Auf diese Weise lassen sich Streulichteffekte, wie in Figur 14 schematisch dargestellt, deutlich reduzieren. Durch die Konturlinie 74 kann eine klarere Begrenzung eines Flächenbereichs erreicht werden. Die Konturlinie ist vorzugsweise 2 bis 8 Pixel breit, vorteilhaft sind 2 bis 4 Pixel.

Optional können Verbindungslinien 78 vorgesehen sein, die die Trennlinie 76 unterbrechen und die Konturlinie 74 mit der flächenhaften Struktur 72 verbinden, um insgesamt die geforderte Stabilität des Objekts 12 zu gewährleisten. Insbesondere bei Trennlinien 76 mit einer Breite von nicht mehr als 8 Pixeln haben diese Verbindungslinien 78 kaum Auswirkungen auf die durch die Trennlinie 76 erreichte Streulichtreduzierung.

Wie bereits im einleitenden Teil erläutert, können auch zwei oder mehr Trennlinien 76 vorgesehen sein, die dann parallel zueinander verlaufen und jeweils durch eine durchgehende Konturlinie voneinander getrennt sind. Ebenso kann die im Bereich einer Außenkontur einer Struktur 72 beschriebene Anordnung einer Trennlinie bei Ausnehmungen in einer Objektschicht vorgesehen sein,, also bei nicht belichteten Strukturen. Diese können dann außen von einer Konturlinie 74 umgeben sein, die wiederum von einer Trennlinie 76 umgeben ist, um die Ausnehmung gegenüber einer größeren, zu belichteten Struktur abzugrenzen und das Auftreten von Streulicht zu minimieren. Insbesondere ist es bei kleinen Ausnehmungen in einer Objektschicht so erst möglich, diese überhaupt mit den gewünschten Abmessungen auszubilden.

Zur Verbesserung äußerer und innerer Oberflächen des Objekts 12 umfasst die Einrichtung (26) eine Oszillationseinrichtung (80). Diese kann, wie schematisch in Figur 2 dargestellt, mit der Abbildungsoptik 20 gekoppelt sein. Alternativ ist es auch möglich, diese mit der Platte 48 oder der Trägerplatte 42 zu koppeln. Denkbar ist es auch, die Maskeneinheit 24 mit der Oszillationseinrichtung 80 zu koppeln. Die Oszillationseinrichtung 80 ist vorzugsweise in Form einer mechanischen Oszillationseinrichtung 80 ausgebildet, um eine oszillierende Belichtung in der Bild-/Bauebene 22 zu erreichen.

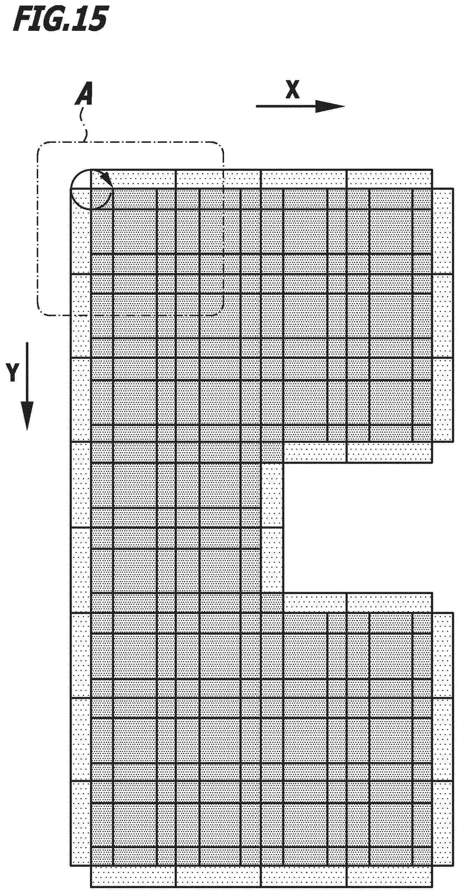

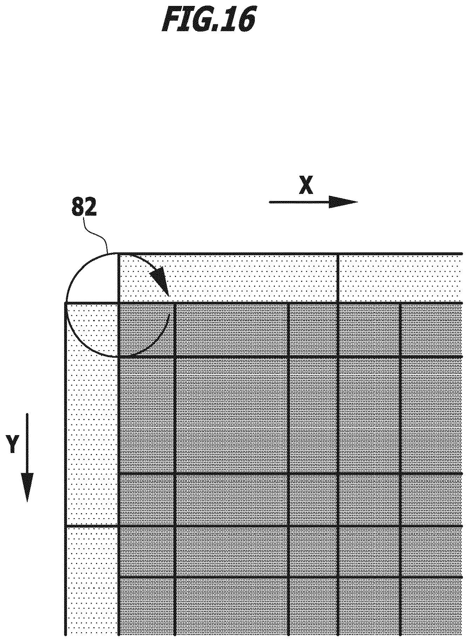

Die Oszillationseinrichtung 80 ist vorzugsweise ausgebildet zum Überlagern einer Oszillation der Belichtung in einer x- und/oder einer y-Richtung in einer Ebene parallel zur Bild-/Bauebene 22. Vorzugsweise liegt der Oszillationshub in einem Bereich von weniger als 1 Pixel, idealerweise beträgt er 0,25 Pixel. Damit kann, wie schematisch durch den Pfeil 82 in den Figuren 15 und 16 dargestellt, eine kreisende Bewegung des durch die Maskeneinheit 24 vorgegebenen Strahlungsfelds in der Bild-/Bauebene 22 relativ zu der zuletzt ausgebildeten Objektschicht realisiert werden. Auf diese Weise ergibt sich eine partielle Überlagerung bei der Belichtung im Konturbereich. Werden beispielsweise während der Belichtungszeit einer Objektschicht ein oder mehrere Oszillationszyklen durchgeführt, so werden alle äußeren und inneren Ecken und Kanten mit dem entsprechenden Radius des durch die Oszillation definierten Kreises abgerundet.

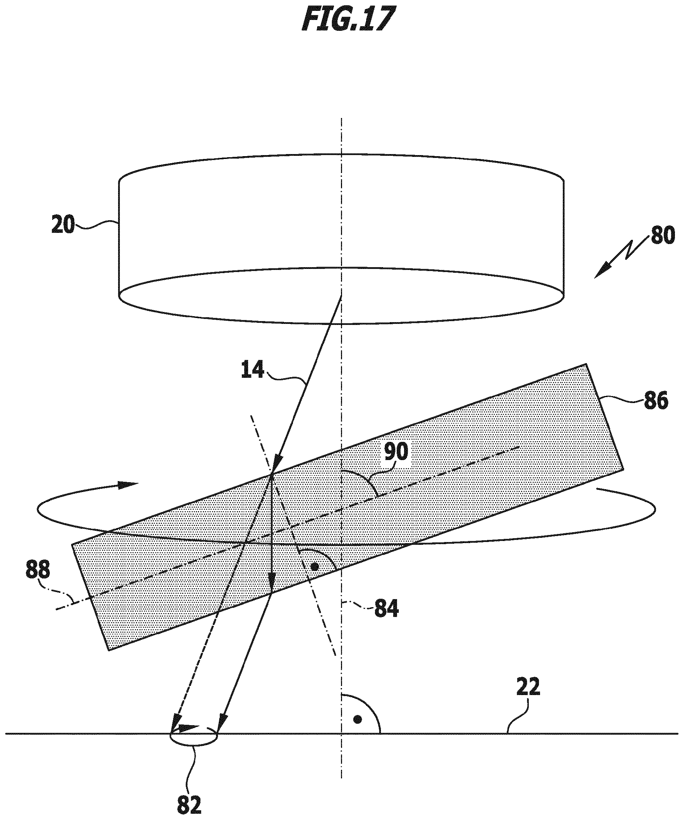

Insbesondere kann die Oszillationseinrichtung 80, wie schematisch in Figur 17 dargestellt eine planparallele Scheibe 86 umfassen, die um eine Rotationsachse 84 rotiert, welche relativ zur Bild-/Bauebene 22 einen Winkel von 90° oder im Wesentlichen 90° geneigt ist. Allerdings ist die Scheibe 86, die eine Scheibenebene 88 definiert, derart gegenüber der Bild-/Bauebene 22 geneigt, dass die Scheibenebene 88 mit der Rotationsachse 84 einen von 90° abweichenden Winkel 90 einschließt. Aufgrund der Rotation der Scheibe 86 wird wie in Figur 17 schematisch dargestellt eine durch den Pfeil 82 symbolisierte kreisende Bewegung des durch die Maskeneinheit 24 vorgegebenen Strahlungsfelds in der Bild-/Bauebene 22 relativ zu der zuletzt ausgebildeten Objektschicht realisiert, und zwar aufgrund der Brechung der Strahlung 14 an der Scheibe 86.

Durch die Oszillationseinrichtung 80 ist es somit insbesondere möglich, mit einer einzigen Belichtungsmaske 28 durch Oszillation beispielsweise derselben oder der Trägerplatte 42 während eines einzigen Belichtungszyklus eine Kantenglättung im Subpixelbereich zu erreichen. Die planparallele Glasscheibe kann insbesondere im Strahlengang zwischen einer digitalen Mikrospiegeleinheit und der Abbildungsoptik 20 oder zwischen der Abbildungsoptik und der Bild-/Bauebene 22 angeordnet werden. Anders als im Stand der Technik beschrieben, ist somit eine Mehrfachbelichtung nicht erforderlich. Vielmehr wird eine gezielt unscharfe Abbildung mit einer einzigen Belichtungsmaske ohne eine Helligkeitssteuerung der einzelnen Pixel durch die Oszillation vorgenommen, um die Kantenglättung zu erreichen. Dieses Vorgehen erfordert keinen zusätzlichen Rechenaufwand, da keine weiteren Bitmaps mit Pixelversatz berechnet werden müssen, wie dies beispielsweise aus dem Stand der Technik bekannt ist.

## Patentansprüche

1. Verfahren zum Herstellen eines dreidimensionalen Objekts (12) durch schichtweises Verfestigen eines unter Einwirkung von Strahlung (14) verfestigbaren Materials (16) unter Verwendung von Belichtungsmasken (28), wobei zum Ausbilden jeder zu verfestigenden Objektschicht (62) des Objekts (12) in einer Bauebene (22) eine einzige digitale Belichtungsmaske (28) erzeugt wird, mittels derer die Strahlung (14) selektiv in die Bauebene projiziert wird, wobei die Bauebene (22) während einer Belichtungszeit mit der einzigen digitalen Belichtungsmaske (28) oszillierend belichtet wird durch Erzeugen einer oszillierenden Relativbewegung zwischen einem von der einzigen digitalen Belichtungsmaske (28) erzeugten Bild in der Bauebene und dem herzustellenden Objekt (12).

2. Verfahren nach Anspruch 1, **dadurch gekennzeichnet, dass**
a) ein Oszillationshub der Belichtung in einer x- und/oder einer y-Richtung parallel zur Bauebene (22) in einem Bereich liegt, welcher maximal einer Breite eines Pixels entspricht, vorzugsweise maximal 0,5 Pixel, insbesondere maximal 0,25 Pixel,
und/oder
b) eine Oszillation der Belichtung in der x- und der y-Richtung während der Belichtungszeit zu einer kreisförmigen oder im Wesentlichen kreisförmigen Oszillation überlagert ist.

3. Verfahren nach einem der voranstehenden Ansprüche, **dadurch gekennzeichnet, dass** eine Strahlungsquelle (18) zur Erzeugung der Strahlung (14) und/oder die einzige Belichtungsmaske (28) und/oder eine Abbildungsoptik (20) zum Abbilden der Strahlung (14) auf die Bauebene (22) und/oder das herzustellende Objekt (12) während der Belichtungszeit oszillierend bewegt werden,
wobei insbesondere eine Abbildungsoptik (20) mit einer rotierenden planparallelen Scheibe (86) verwendet wird, wobei die Scheibe (86) um eine zur Bauebene (22) senkrechte oder im Wesentlichen senkrechte Rotationsachse rotiert wird und eine Scheibenebene (88) definiert, die mit der Rotationsachse (84) einen von 90° abweichenden Winkel (90) einschließt.

4. Verfahren nach einem der voranstehenden Ansprüche, **dadurch gekennzeichnet, dass** für jede Belichtungsmaske (28) in Abhängigkeit der zu verfestigenden Objektschicht (62) eine einzige 2-Bit-Bitmap (30) berechnet wird, welche jedem Pixel der Belichtungsmaske (28) entweder den Bit-Wert (32) "durchlässig" oder den Bit-Wert (34) "nicht durchlässig" zuordnet, dass mindestens einem Flächenbereich (66a) der 2-Bit-Bitmap (30) mit einer Strukturgröße unterhalb einer Grenzstrukturgröße der Bit-Wert (32) "durchlässig" zugewiesen wird und dass jedem Flächenbereich (66b, 66c) oberhalb der Grenzstrukturgröße eine Belichtungstextur (52) zugewiesen wird, welche Belichtungstextur in Form eines Musters von Pixeln mit den Bit-Werten (32) "durchlässig" und (34) "nicht durchlässig" ausgebildet ist.

5. Verfahren nach Anspruch 4, **dadurch gekennzeichnet, dass**
a) die Belichtungstextur (52) höchstens so viele Pixel mit dem Bit-Wert (34) "nicht durchlässig" wie Pixel mit dem Bit-Wert (32) "durchlässig" aufweist
und/oder
b) jede Belichtungstextur (52) einen Belichtungsabschwächungswert aufweist, welcher größer als 0 ist und maximal 0,5 beträgt,
und/oder
c) mindestens einem Flächenbereich (66b, 66c) mit einer Strukturgröße oberhalb der Grenzstrukturgröße eine Belichtungstextur (52) in Abhängigkeit seiner Strukturgröße zugewiesen wird und dass mit zunehmender Strukturgröße der Belichtungsabschwächungswert der Belichtungstextur (52) zunimmt
und/oder
d) identische Belichtungstexturen (52) von Belichtungsmasken (28) zur Belichtung aufeinanderfolgender Objektschichten (62) in einer Ebene parallel zur Bauebene (22) um eine ganzzahlige Pixelzahl relativ zueinander versetzt angeordnet sind, vorzugsweise um 1 Pixel in einer x- und/oder y-Richtung der Ebene parallel zur Bauebene (22),
und/oder
e) unterschiedliche Texturmuster zur Ausbildung der Belichtungstexturen (52) bereitgestellt werden, die ein Verhältnis von Pixeln mit dem Bit-Wert (34) "nicht durchlässig" und von Pixeln mit dem Bit-Wert (32) "durchlässig" aufweisen, die in einem Bereich zwischen 0 und 1 liegen,
und/oder
f) jede Belichtungstextur (52) in Form einer Schraffur oder eines regelmäßigen Musters ausgebildet ist,
und/oder
g) nur Belichtungstexturen (52) verwendet werden, bei denen allenfalls Ecken von Pixeln mit dem Bit-Wert (34) "nicht durchlässig" aufeinandertreffen, jedoch keine Längskanten von Pixeln mit dem Bit-Wert (34) "nicht durchlässig" aneinander angrenzen,
und/oder
h) jede Belichtungstextur (52) durch eine Translation in einer Ebene parallel zur Bauebene (22) in sich selbst überführbar ist,
wobei insbesondere die Translation durch einen Vektor definiert wird, welcher eine Länge aufweist, die n Pixeln in einer x-Richtung und m Pixeln in einer zur x-Richtung nicht parallelen y-Richtung entspricht, wobei n und m ganze Zahlen sind,
und/oder
i) jede Belichtungstextur (52) pixelweise gerastert ist.

6. Verfahren nach einem der voranstehenden Ansprüche, **dadurch gekennzeichnet, dass**
a) jeder Belichtungsfläche, welche eine Querschnittsfläche des Objektes definiert, in jeder Belichtungsmaske (28) für jede Aussen- und Innenkontur der Belichtungsfläche jeweils eine geschlossene Randlinie (56) zugewiesen wird und dass den die Randlinie (56) ausbildenden Pixeln der Bit-Wert (32) "durchlässig" zugewiesen wird, wobei insbesondere eine Breite der Randlinie (56) mindestens zwei Pixel beträgt, vorzugsweise liegt die Breite der Randlinie (56) in einem Bereich von 2 bis 8 Pixeln, weiter vorzugsweise in einem Bereich von 2 bis 4 Pixeln,
und/oder
b) als Strahlung (14) elektromagnetische Strahlung oder Teilchenstrahlung verwendet wird,
und/oder
c) jeder Belichtungsmaske (28) eine individuelle Belichtungszeit zugeordnet wird,
wobei insbesondere die Belichtungszeit für alle Belichtungsmasken (28) identisch ist.

7. Verfahren nach einem der voranstehenden Ansprüche, **dadurch gekennzeichnet, dass** jeder Belichtungsfläche, welche eine Querschnittsfläche des Objektes definiert, in jeder Belichtungsmaske (28) eine in sich geschlossene äußere Konturlinie (74) zur Begrenzung der Belichtungsfläche zugewiesen wird, dass den Pixeln zur Ausbildung der Konturlinie (74) der Bit-Wert (32) "durchlässig" zugewiesen wird, dass jeder Belichtungsfläche in jeder Belichtungsmaske (28) eine innen an die Konturlinie (74) - angrenzende Trennlinie (76) zugewiesen wird und dass den Pixeln zur Ausbildung der Trennlinie (76) der Bit-Wert (34) "nicht durchlässig" zugewiesen wird,
wobei weiter insbesondere eine Breite der Konturlinie (74) und/oder der Trennlinie (76) mindestens 2 Pixel beträgt, insbesondere in einem Bereich von 2 bis 8 Pixeln liegt, vorzugsweise in einem Bereich von 2 bis 4 Pixeln.

8. Belichtungsmaskenerzeugungseinrichtung (26) für eine Vorrichtung (10) zum Herstellen eines dreidimensionalen Objekts (12) durch schichtweises Verfestigen eines unter Einwirkung von Strahlung (14) verfestigbaren Materials (16) unter Verwendung von Belichtungsmasken (28), welche Vorrichtung (10) eine Strahlungsquelle (18) zum Erzeugen der Strahlung (14) und die Belichtungsmaskenerzeugungseinrichtung (26) umfasst, welche Belichtungsmaskenerzeugungseinrichtung (26) zum Ausbilden jeder zu verfestigenden Objektschicht (62) des Objekts (12) in einer Bauebene (22) mindestens eine Belichtungsmaske (28) erzeugt, mittels derer die Strahlung (14) selektiv in die Bauebene projiziert wird, **dadurch gekennzeichnet, dass** die Belichtungsmaskenerzeugungseinrichtung (26) eine Oszillationseinrichtung (80) umfasst zum oszillierenden Belichten der Bauebene (22) während einer Belichtungszeit.

9. Belichtungsmaskenerzeugungseinrichtung nach Anspruch 8, **dadurch gekennzeichnet, dass**
a) die Oszillationseinrichtung (80) einen Oszillationshub der Belichtung aufweist, welcher in einer x- und/oder einer y-Richtung parallel zur Bauebene (22) in einem Bereich liegt, welcher maximal einer Breite eines Pixels entspricht, vorzugsweise maximal 0,5 Pixel, insbesondere maximal 0,25 Pixel,
und/oder
b) die Oszillationseinrichtung (80) ausgebildet ist zum Überlagern einer Oszillation der Belichtung in der x- und der y-Richtung während der Belichtungszeit zu einer kreisförmigen oder im Wesentlichen kreisförmigen Oszillation,
und/oder
c) die Oszillationseinrichtung (80) gekoppelt ist mit der Strahlungsquelle (18) und/oder der Belichtungsmaskenerzeugungseinrichtung (26) und/oder einer Abbildungsoptik (20) zum Abbilden der Strahlung (14) auf die Bauebene (22) und/oder einem Träger (42) für das herzustellende Objekt (12) zum oszillierenden Bewegen derselben während der Belichtungszeit
und/oder
d) die Abbildungsoptik (20) eine rotierende planparallele Scheibe (86) umfasst, welche um eine zur Bauebene (22) senkrechte oder im Wesentlichen senkrechte Rotationsachse (84) rotierbar gelagert ist und eine Scheibenebene (88) definiert, die mit der Rotationsachse (84) einen von 90° abweichenden Winkel (90) einschließt
und/oder
e) die Belichtungsmaskenerzeugungseinrichtung ausgebildet ist zum Erzeugen einer einzigen Belichtungsmaske (28)
und/oder
f) die Belichtungsmaskenerzeugungseinrichtung ausgebildet ist zum Erzeugen einer digitalen Belichtungsmaske (28).

10. Belichtungsmaskenerzeugungseinrichtung nach Anspruch 8 oder 9, **dadurch gekennzeichnet, dass** sie eine Recheneinheit (38) umfasst zum Berechnen einer einzigen 2-Bit-Bitmap (30) für jede Belichtungsmaske (28) in Abhängigkeit der zu verfestigenden Objektschicht (62), welche 2-Bit-Bitmap (30) jedem Pixel der Belichtungsmaske (28) entweder den Bit-Wert (32) "durchlässig" oder den Bit-Wert (34) "nicht durchlässig" zuordnet, zum Zuweisen des Bit-Werts (32) "durchlässig" zu jedem Flächenbereich (66a) der 2-Bit-Bitmap (30) mit einer Strukturgröße unterhalb einer Grenzstrukturgröße und zum Zuweisen einer Belichtungstextur (52) zu jedem Flächenbereich (66b, 66c) oberhalb der Grenzstrukturgröße, welche Belichtungstextur (52) in Form eines Musters von Pixeln mit den Bit-Werten (32) "durchlässig" und (34) "nicht durchlässig" ausgebildet ist.

11. Belichtungsmaskenerzeugungseinrichtung nach Anspruch 10, **dadurch gekennzeichnet, dass**
a) die Recheneinheit (38) ausgebildet ist zum Zuweisen einer Belichtungstextur (52), welche höchstens so viele Pixel mit dem Bit-Wert (34) "nicht durchlässig" wie Pixel mit dem Bit-Wert (32) "durchlässig" aufweist,
und/oder
b) die Recheneinheit (38) ausgebildet ist zum Zuweisen einer Belichtungstextur (52), welche einen Belichtungsabschwächungswert aufweist, welcher größer als 0 ist und maximal 0,5 beträgt,
und/oder
c) die Recheneinheit (38) ausgebildet ist zum Zuweisen einer Belichtungstextur (52) zu jedem Flächenbereich (66b, 66c) mit einer Strukturgröße oberhalb der Grenzstrukturgröße in Abhängigkeit seiner Strukturgröße, wobei mit zunehmender Strukturgröße der Belichtungsabschwächungswert der Belichtungstextur (52) zunimmt,
und/oder
d) die Recheneinheit (38) ausgebildet ist zum versetzten Anordnen identischer Belichtungstexturen (52) von Belichtungsmasken (28) zur Belichtung aufeinanderfolgender Objektschichten (62) in einer Ebene parallel zur Bauebene (22) um eine ganzzahlige Pixelzahl relativ zueinander, vorzugsweise um 1 Pixel in einer x- und/oder y-Richtung der Ebene parallel zur Bauebene (22),
und/oder
e) die Belichtungsmaskenerzeugungseinrichtung (26) unterschiedliche Texturmuster zur Ausbildung der Belichtungstexturen (52) bereitstellt, die ein Verhältnis von Pixeln mit dem Bit-Wert (34) "nicht durchlässig" und von Pixeln mit dem Bit-Wert (32) "durchlässig" aufweisen, die in einem Bereich zwischen 0 und 1 liegen,
und/oder
f) die Belichtungsmaskenerzeugungseinrichtung (28) jede Belichtungstextur (52) in Form einer Schraffur oder eines regelmäßigen Musters bereitstellt
und/oder
g) die Recheneinheit (38) ausgebildet ist zum ausschließlichen Verwenden von Belichtungstexturen (52), bei denen allenfalls Ecken von Pixeln mit dem Bit-Wert (34) "nicht durchlässig" aufeinandertreffen, jedoch keine Längskanten von Pixeln mit dem Bit-Wert (34) "nicht durchlässig" aneinander angrenzen.

12. Belichtungsmaskenerzeugungseinrichtung nach Anspruch 10 oder 11, **dadurch gekennzeichnet, dass** die Belichtungsmaskenerzeugungseinrichtung (26) ausgebildet ist zum
a) Bereitstellen von Belichtungstexturen (52), welche durch eine Translation in einer Ebene parallel zur Bauebene (22) in sich selbst überführbar sind,
wobei insbesondere die Translation durch einen Vektor definiert wird, welcher eine Länge aufweist, die n Pixeln in einer x-Richtung und m Pixeln in einer zur x-Richtung nicht parallelen y-Richtung entspricht, wobei n und m ganze Zahlen sind,
und/oder
b) Bereitstellen von Belichtungstexturen (52), welche pixelweise gerastert sind,
und/oder
c) Zuweisen einer geschlossenen Randlinie (56) zu jeder Belichtungsmaske (28) für jeden Flächenbereich (66b, 66c) oberhalb der Grenzstrukturgröße, wobei den die Randlinie (56) ausbildenden Pixeln der Bit-Wert "durchlässig" zugewiesen ist,
wobei insbesondere eine Breite der Randlinie (56) mindestens 2 Pixel beträgt, insbesondere in einem Bereich von 2 bis 8 Pixeln liegt, vorzugsweise in einem Bereich von 2 bis 4 Pixeln,
und/oder
d) Zuordnen einer individuellen Belichtungszeit zu jeder Belichtungsmaske (28),
wobei insbesondere die Belichtungsmaskenerzeugungseinrichtung (26) ausgebildet ist zum Zuordnen einer identischen Belichtungszeit für alle Belichtungsmasken (28).

13. Belichtungsmaskenerzeugungseinrichtung nach einem der Ansprüche 8 bis 12, **dadurch gekennzeichnet, dass** die Belichtungsmaskenerzeugungseinrichtung (26) ausgebildet ist zum Zuweisen einer in sich geschlossenen äußeren Konturlinie (74) zur Begrenzung der Objektschicht (62) und einer innen an die Konturlinie (74) direkt angrenzenden Trennlinie (76) zu jeder Belichtungsmaske (28), wobei den Pixeln zur Ausbildung der Konturlinie (74) der Bit-Wert (32) "durchlässig" und den Pixeln zur Ausbildung der Trennlinie (76) der Bit-Wert (34) "nicht durchlässig" zugewiesen ist,
wobei weiter insbesondere eine Breite der Konturlinie (74) und/oder der Trennlinie (76) mindestens 2 Pixel beträgt, insbesondere in einem Bereich von 2 bis 8 Pixeln liegt, vorzugsweise in einem Bereich von 2 bis 4 Pixeln.

14. Vorrichtung (10) zum Herstellen eines dreidimensionalen Objekts (12) durch schichtweises Verfestigen eines unter Einwirkung von Strahlung (14) verfestigbaren Materials (16) unter Verwendung von Belichtungsmasken (28), umfassend eine Strahlungsquelle (18) zum Erzeugen der Strahlung (14) und eine Belichtungsmaskenerzeugungseinrichtung (26), **dadurch gekennzeichnet, dass** die Belichtungsmaskenerzeugungseinrichtung (26) ausgebildet ist in Form einer Belichtungsmaskenerzeugungseinrichtung (26) nach einem der Ansprüche 8 bis 13.

15. Verwendung einer Vorrichtung (10) zum Herstellen eines dreidimensionalen Objekts (12) durch schichtweises Verfestigen eines unter Einwirkung von Strahlung (14) verfestigbaren Materials (16) unter Verwendung von Belichtungsmasken (28) nach Anspruch 14 zur Durchführung eines Verfahrens zum Herstellen eines dreidimensionalen Objekts (12) durch schichtweises Verfestigen eines unter Einwirkung von Strahlung (14) verfestigbaren Materials (16) unter Verwendung von Belichtungsmasken (28) nach einem der Ansprüche 1 bis 7.

## Claims

1. Method for producing a three-dimensional object (12) by layer by layer solidifying of a material (16) which is solidifiable under the action of radiation (14), making use of exposure masks (28), wherein in order to form each object layer (62) to be solidified of the object (12) in a construction plane (22), there is generated a single, digital exposure mask (28) by means of which the radiation (14) is selectively projected into the construction plane, wherein the construction plane (22) is exposed in oscillating manner by the single digital exposure mask (28) during an exposure time by generating an oscillating relative movement between an image to be generated by the single digital exposure mask (28) in the construction plane and the object (12) to be produced

2. Method according to claim 1, **characterized in that**
a) an oscillatory displacement of the exposure lies in an x-direction and/or a y-direction parallel to the construction plane (22) in a region which corresponds to not more than a width of a pixel, preferably not more than 0.5 pixel, in particular not more than 0.25 pixel,
and/or
b) an oscillation of the exposure in the x-direction and the y-direction is overlaid during the exposure time to a circular or substantially circular oscillation.

3. Method according to any one of the preceding claims, **characterized in that** a radiation source (18) for generating the radiation (14) and/or the single exposure mask (28) and/or an imaging optical system (20) for imaging the radiation (14) on the construction plane (22) and/or the object (12) to be produced are moved in oscillating manner during the exposure time,
wherein, in particular, an imaging optical system (20) with a rotating plane-parallel plate (86) is used wherein the plate (86) is rotated about a rotation axis perpendicular or substantially perpendicular to the construction plane (22) and defines a plate plane (88), which includes an angle (90) with the rotation axis (84) differing from 90°.

4. Method according to any one of the preceding claims, **characterized in that** for each exposure mask (28) a single 2-bit bitmap (30) is calculated according to the object layer (62) to be solidified, said single 2-bit bitmap (30) assigning to each pixel of the exposure mask (28) either the bit-value (32) "transparent" or the bit-value (34) "non-transparent", that the bit-value (32) "transparent" is assigned to each surface region (66a) of the 2-bit bitmap (30) with a structure size below a limit structure size and that an exposure texture (52) is assigned to each surface region (66b, 66c) above the limit structure size, said exposure texture being configured in the form of a pattern of pixels with the bit-values (32) "transparent" and (34) "non-transparent".

5. Method according to claim 4, **characterized in that**
a) the exposure texture (52) has at most as many pixels with the bit-value (34) "non-transparent" as pixels with the bit-value (32) "transparent"
and/or
b) each exposure texture (52) has an exposure attenuation value which is greater than 0 and not more than 0.5,
and/or
c) an exposure texture (52) is assigned to at least one surface region (66b, 66c) with a structure size above the limit structure size, depending on the structure size of said surface region, and **in that** with increasing structure size the exposure attenuation value of the exposure texture (52) increases
and/or
d) identical exposure textures (52) of exposure masks (28) for exposing successive object layers (62) in a plane parallel to the construction plane (22) are arranged offset relative to one another by a whole number of pixels, preferably by 1 pixel, in an x-direction and/or a y-direction of the plane parallel to the construction plane (22)
and/or
e) different texture patterns are provided for forming the exposure textures (52), said texture patterns having a ratio of pixels with the bit-value (34) "non-transparent" and of pixels with the bit-value (32) "transparent" lying in a range between 0 and 1
and/or
f) each exposure texture (52) is configured in the form of a hatching or a regular pattern,
and/or
g) exclusively exposure textures (52) are used for which, at most, corners of pixels with the bit-value (34) "non-transparent" meet one another, but no longitudinal edges of pixels with the bit-value (34) "non-transparent" adjoin one another,
and/or
h) each exposure texture (52) is convertible into itself by a translation in a plane parallel to the construction plane (22),
wherein, in particular, the translation is defined by a vector which has a length which corresponds to n pixels in an x-direction and m pixels in a y-direction not parallel to the x-direction, wherein n and m are whole numbers
and/or
i) each exposure texture (52) is rasterised pixel by pixel.

6. Method according to any one of the preceding claims, **characterized in that**
a) a closed edge line (56) is assigned to each exposure area which defines a cross-sectional area of the object in each exposure mask (28) for each outer and inner contour of the exposure area and **in that** the bit-value (32) "transparent" is assigned to the pixels forming the edge line (56),
wherein, in particular, a width of the edge line (56) is at least two pixels, preferably the width of the edge line (56) lies in one region in a range from 2 to 8 pixels, more preferably, in a range from 2 to 4 pixels,
and/or
b) electromagnetic radiation or particulate radiation is used as the radiation (14),
and/or
c) an individual exposure time is assigned to each exposure mask (28),
wherein, in particular, the exposure time for all exposure masks (28) is identical.

7. Method according to any one of the preceding claims, **characterized in that** in each exposure mask (28), a self-contained closed outer contour line (74) for delimiting the exposure area is assigned to each exposure area which defines a cross-sectional area of the object, **in that** the bit-value (32) "transparent" is assigned to the pixels for forming the contour line (74), **in that** a separating line (76) bordering internally on the contour line (74) is assigned to each exposure area in each exposure mask (28) and **in that** the bit-value (34) "non-transparent" is assigned to the pixels for forming the separating line (76),
wherein further, in particular, a width of the contour line (74) and/or the separating line (76) is at least 2 pixels, and particularly lies in a range from 2 to 8 pixels, preferably in a range from 2 to 4 pixels.

8. Exposure mask generating apparatus (26) for a device (10) for producing a three-dimensional object (12) by layer by layer solidifying of a material (16) which is solidifiable under the action of radiation (14), making use of exposure masks (28), said device (10) comprising a radiation source (18) for generating the radiation (14) and the exposure mask generating apparatus (26), said exposure mask generating apparatus (26), for forming each object layer (62) to be solidified of the object (12) in a construction plane (22), generates at least one exposure mask (28) by means of which the radiation (14) is selectively projected onto the construction plane, **characterized in that** the exposure mask generating apparatus (26) comprises an oscillation device (80) for exposing the construction plane (22) in oscillating manner during an exposure time.

9. Exposure mask generating apparatus according to claim 8, **characterized in that**
a) the oscillation device (80) has an oscillation displacement of the exposure which lies in an x-direction and/or a y-direction parallel to the construction plane (22) in a region which corresponds to not more than a width of a pixel, preferably not more than 0.5 pixel, in particular not more than 0.25 pixel,
and/or
b) the oscillation device (80) is configured to overlay an oscillation of the exposure in the x-direction and the y-direction during the exposure time to a circular or substantially circular oscillation,
and/or
c) the oscillation device (80) is coupled to the radiation source (18) and/or the exposure mask generating apparatus (26) and/or an imaging optical system (20) for imaging the radiation (14) onto the construction plane (22) and/or a carrier (42) for the object (12) to be produced for moving the same in oscillating manner during the exposure time
and/or
d) the imaging optical system (20) comprises a rotating plane-parallel plate (86) which is mounted rotatable about a rotation axis (84) which is perpendicular or substantially perpendicular to the construction plane (22), said rotating plane-parallel plate defining a plate plane (88), which includes an angle (90) with the rotation axis (84) differing from 90°
and/or
e) the exposure mask generating apparatus is configured for generating a single exposure mask (28)
and/or
f) the exposure mask generating apparatus is configured for generating a digital exposure mask (28).

10. Exposure mask generating apparatus according to claim 8 or 9, **characterized in that** it comprises a computer unit (38) for calculating a single 2-bit bitmap (30) for each exposure mask (28) according to the object layer (62) to be solidified, said 2-bit bitmap (30) assigning to each pixel of the exposure mask (28) either the bit-value (32) "transparent" or the bit-value (34) "non-transparent", for assigning the bit-value (32) "transparent" to each surface region (66a) of the 2-bit bitmap (30) with a structure size below a limit structure size and for assigning an exposure texture (52) to each surface region (66b, 66c) above the limit structure size, said exposure texture (52) being configured in the form of a pattern of pixels with the bit-values (32) "transparent" and (34) "non-transparent".

11. Exposure mask generating apparatus according to claim 10, **characterized in that**
a) the computer unit (38) is configured to assign an exposure texture (52) which has at most as many pixels with the bit-value (34) "non-transparent" as pixels with the bit-value (32) "transparent",
and/or
b) the computer unit (38) is configured to assign an exposure texture (52) which has an exposure attenuation value which is greater than 0 and not more than 0.5,
and/or
c) the computer unit (38) is configured for assigning an exposure texture (52) to each surface region (66b, 66c) with a structure size above the limit structure size, depending on the structure size of said surface region, wherein with increasing structure size, the exposure attenuation value of the exposure texture (52) increases,
and/or
d) the computer unit (38) is configured for offset arrangement of identical exposure textures (52) of exposure masks (28) for exposing successive object layers (62) in a plane parallel to the construction plane (22) offset relative to one another by a whole number of pixels, preferably by 1 pixel, in an x-direction and/or a y-direction of the plane parallel to the construction plane (22),
and/or
e) the exposure mask generating apparatus (26) provides different texture patterns for forming the exposure textures (52), said texture patterns having a ratio of pixels with the bit-value (34) "non-transparent" and of pixels with the bit-value (32) "transparent" lying in a range between 0 and 1,
and/or
f) the exposure mask generating apparatus (28) provides each exposure texture (52) in the form of a hatching or a regular pattern
and/or
g) the computer unit (38) is configured to use exclusively exposure textures (52) for which, at most, corners of pixels with the bit-value (34) "non-transparent" meet one another, but no longitudinal edges of pixels with the bit-value (34) "non-transparent" adjoin one another.

12. Exposure mask generating apparatus according claim 10 or 11, **characterized in that** the exposure mask generating apparatus (26) is configured for
a) providing exposure textures (52) which are convertible into themselves by a translation in a plane parallel to the construction plane (22),
wherein the translation is defined by a vector which has a length which corresponds to n pixels in an x-direction and m pixels in a y-direction not parallel to the x-direction, wherein n and m are whole numbers,
and/or
b) providing exposure textures (52) which are rasterised pixel by pixel,
and/or
c) assigning a closed edge line (56) to each exposure mask (28) for each surface region (66b, 66c) above the limit structure size, wherein the bit-value "transparent" is assigned to the pixels forming the edge line (56),
wherein, in particular, a width of the edge line (56) is at least 2 pixels, particularly lies in a range from 2 to 8 pixels, preferably in a range from 2 to 4 pixels,
and/or
d) assigning an individual exposure time to each exposure mask (28), wherein, in particular, the exposure mask generating apparatus (26) is configured for assigning an identical exposure time for all exposure masks (28).

13. Exposure mask generating apparatus according to any one of claims 8 to 12, **characterized in that** the exposure mask generating apparatus (26) is configured for assigning a self-contained closed outer contour line (74) for delimiting the object layer (62) and a separating line (76) directly bordering the contour line (74) internally to each exposure mask (28), wherein the bit-value (32) "transparent" is assigned to the pixels for forming the contour line (74) and the bit-value (34) "non-transparent" is assigned to the pixels for forming the separating line (76),
wherein further, in particular, a width of the contour line (74) and/or of the separating line (76) is at least 2 pixels, particularly in a range from 2 to 8 pixels, preferably in a range from 2 to 4 pixels.

14. Device (10) for producing a three-dimensional object (12) by layer by layer solidifying of a material (16) which is solidifiable under the action of radiation (14), making use of exposure masks (28), comprising a radiation source (18) for generating the radiation (14), and an exposure mask generating apparatus (26), **characterized in that** the exposure mask generating apparatus (26) is configured in the form of an exposure mask generating apparatus (26) according to any one of claims 8 to 13.

15. Use of a device (10) for producing a three-dimensional object (12) by layer by layer solidifying of a material (16) which is solidifiable under the action of radiation (14) using exposure masks (28) according to claim 14 for carrying out a method for producing a three-dimensional object (12) by layer by layer solidifying of a material (16) that is solidifiable under the action of radiation (14) using exposure masks (28) according to any one of claims 1 to 7.

## Revendications

1. Procédé pour fabriquer un objet tridimensionnel (12) par solidification couche par couche d'un matériau (16) pouvant être solidifié sous l'effet d'un rayonnement (14) au moyen de masques d'insolation (28), dans lequel, pour former chaque couche d'objet (62) à solidifier de l'objet (12) dans un plan de niveau (22), un seul masque d'insolation (28) numérique est produit, au moyen duquel le rayonnement (14) est projeté de manière sélective dans le plan de niveau,
dans lequel le plan de niveau (22) est insolé de manière oscillante pendant un temps d'insolation au moyen du masque d'insolation numérique (28) unique par production d'un mouvement relatif oscillant entre une image produite par le masque d'insolation numérique (28) unique dans le plan de construction et l'objet (12) à fabriquer.

2. Procédé selon la revendication 1, **caractérisé en ce que**
a) une course d'oscillation de l'insolation dans une direction x et/ou y parallèle au plan de niveau (22) se situe dans une zone correspondant au maximum à une largeur d'un pixel, de préférence au maximum à 0,5 pixel, en particulier au maximum à 0,25 pixel,
et/ou
b) **en ce qu'**une oscillation de l'insolation dans la direction x et/ou y pendant le temps d'insolation est superposée à une oscillation circulaire ou sensiblement circulaire.

3. Procédé selon l'une quelconque des revendications précédentes, **caractérisé en ce qu'**une source de rayonnement (18) destinée à produire le rayonnement (14) et/ou le masque d'insolation (28) unique et/ou une optique de reproduction (20) destinée à reproduire le rayonnement (14) sur le plan de niveau (22) et/ou l'objet (12) à fabriquer effectuent un mouvement oscillant pendant le temps d'insolation,
dans lequel, en particulier, une optique de reproduction (20) comprenant une plaque (86) rotative à plan parallèle est utilisée, dans lequel la plaque (86) est amenée en rotation autour d'un axe de rotation perpendiculaire ou sensiblement perpendiculaire au plan de niveau (22) et définit un plan de plaque (88), qui forme un angle (90) différent de 90° avec l'axe de rotation (84).

4. Procédé selon l'une quelconque des revendications précédentes, **caractérisé en ce que**, pour chaque masque d'insolation numérique (28), en fonction de la couche d'objet (62) à solidifier, une mappe binaire à 2 bits (30) unique est calculée, laquelle alloue à chaque pixel du masque d'insolation (28) soit la valeur binaire (32) "transparent" soit la valeur binaire (34) "non transparent", **en ce que** la valeur binaire (32) "transparent" est attribuée à au moins une zone de surface (66a) de la mappe binaire à 2 bits (30) dont la taille de structure est inférieure à une taille de structure limite, et **en ce qu'**une texture d'insolation (52) est attribuée à chaque zone de surface (66b, 66c) supérieure à la taille de structure limite, laquelle texture d'insolation est réalisée sous la forme d'un motif de pixels assortis des valeurs binaires (32) "transparent" et (34) "non transparent".

5. Procédé selon la revendication 4, **caractérisé en ce que**
a) la texture d'insolation (52) présente au maximum autant de pixels assortis de la valeur binaire (34) "non transparent" que de pixels assortis de la valeur binaire (32) "transparent"
et/ou
b) chaque texture d'insolation (52) présente une valeur d'atténuation d'insolation, laquelle est supérieure à 0 et atteint au maximum 0,5,
et/ou
c) une texture d'insolation (52) est attribuée à au moins une zone de surface (66b, 66c) dont la taille de structure est supérieure à la taille de structure limite en fonction de sa taille de structure et **en ce que** la valeur d'atténuation de l'insolation de la texture d'insolation (52) augmente à mesure que croît la taille de structure
et/ou
d) des textures d'insolation (52) identiques de masques d'insolation (28) destinés à l'insolation de couches d'objet (62) successives sont agencées dans un plan parallèle au plan de niveau (22) en étant décalées les unes des autres d'un nombre entier de pixels, de préférence de 1 pixel dans une direction x et/ou y du plan parallèle au plan de niveau (22),
et/ou
e) des motifs de texture différents destinés à former les textures d'insolation (52) sont fournis, qui présentent un rapport des pixels assortis de la valeur binaire (34) "non transparent" et des pixels assortis de la valeur binaire (32) "transparent" qui se situe dans une plage comprise entre 0 et 1,
et/ou
f) chaque texture d'insolation (52) est réalisée sous la forme d'une hachure ou d'un motif régulier,
et/ou
g) seules les textures d'insolation (52) pour lesquelles à la rigueur des coins de pixels assortis de la valeur binaire (34) "non transparent" se rencontrent, mais aucun bord longitudinal de pixels assortis de la valeur binaire (34) "non transparent" n'est adjacent l'un à l'autre, sont utilisées
et/ou
h) chaque texture d'insolation (52) peut fusionner dans elle-même à la suite d'une translation dans un plan parallèle au plan de niveau (22),
dans lequel en particulier la translation est définie par un vecteur, lequel présente une longueur qui correspond à n pixels dans une direction x et à m pixels dans une direction y non parallèle à la direction x, dans lequel n et m sont des nombres entiers,
et/ou
i) chaque texture d'insolation (52) est constituée d'une trame pixélisée.

6. Procédé selon l'une quelconque des revendications précédentes, **caractérisé en ce que**
a) respectivement une ligne de bord (56) fermée est attribuée à chaque surface d'insolation, laquelle définit une surface de section transversale de l'objet, dans chaque masque d'insolation (28) pour chaque contour extérieur et intérieur de la surface d'insolation, et **en ce que** la valeur binaire (32) "transparent" est attribuée aux pixels formant la ligne de bord (56),
dans lequel en particulier une largeur de la ligne de bord (56) atteint au moins deux pixels, de préférence la largeur de la ligne de bord (56) se situe dans une plage de 2 à 8 pixels, mieux encore dans une plage de 2 à 4 pixels,
et/ou
b) un rayonnement électromagnétique ou un rayonnement particulaire est utilisé comme rayonnement (14),
et/ou
**en ce qu'**un temps d'insolation individuel est alloué à chaque masque d'insolation (28),
dans lequel en particulier le temps d'insolation est identique pour tous les masques d'insolation (28).

7. Procédé selon l'une quelconque des revendications précédentes, **caractérisé en ce qu'**une ligne de contour (74) extérieure fermée sur elle-même et destinée à délimiter la surface d'insolation est attribuée à chaque surface d'insolation définissant une surface de section transversale de l'objet, dans chaque masque d'insolation (28), **en ce que** la valeur binaire (32) "transparent" est attribuée aux pixels destinés à former la ligne de contour (74), **en ce qu'**une ligne de séparation (76) adjacente de manière intérieure à la ligne de contour (74) est attribuée à chaque surface d'insolation dans chaque masque d'insolation (28), et **en ce que** la valeur binaire (34) "non transparent" est attribuée aux pixels destinés à former la ligne de séparation (76),
dans lequel, plus particulièrement, une largeur de la ligne de contour (74) et/ou de la ligne de séparation (76) atteint au moins deux pixels, se situe en particulier dans une plage de 2 à 8 pixels, de préférence dans une plage de 2 à 4 pixels.

8. Dispositif de production de masques d'insolation (26) pour un dispositif (10) pour fabriquer un objet (12) tridimensionnel par solidification couche par couche d'un matériau (16) pouvant être solidifié sous l'effet d'un rayonnement (14) au moyen de masques d'insolation (28), lequel dispositif (10) comporte une source de rayonnement (18) destinée à produire le rayonnement (14) et le dispositif de production de masques d'insolation (26), lequel dispositif de production de masques d'insolation (26), pour former chaque couche d'objet (62) à solidifier de l'objet (12), produit dans un plan de niveau (22) au moins un masque d'insolation (28), au moyen duquel le rayonnement (14) est projeté de manière sélective dans le plan de niveau, **caractérisé en ce que** le dispositif de production de masques d'insolation (26) comporte un dispositif d'oscillation (80) destiné à l'insolation oscillante du plan de niveau (22) pendant un temps d'insolation.

9. Dispositif de production de masques d'insolation selon la revendication 8, **caractérisé en ce que**
a) le dispositif d'oscillation (80) présente une course d'oscillation de l'insolation, laquelle se situe dans une direction x et/ou y parallèle au plan de niveau (22) dans une zone correspondant au maximum à une largeur d'un pixel, de préférence au maximum à 0,5 pixel, en particulier au maximum à 0,25 pixel,
et/ou
b) le dispositif d'oscillation (80) est conçu pour superposer une oscillation de l'insolation dans la direction x et la direction y pendant le temps d'insolation à une oscillation circulaire ou sensiblement circulaire,
et/ou
c) le dispositif d'oscillation (80) est accouplé à la source de rayonnement (18) et/ou au dispositif de production de masques d'insolation (26) et/ou à une optique de reproduction (20) destinée à reproduire le rayonnement (14) sur le plan de niveau (22) et/ou un support (42) pour l'objet (12) à fabriquer pour le mouvement oscillant de ces derniers pendant le temps d'insolation
et/ou
d) l'optique de reproduction (20) comporte une plaque (86) rotative à plan parallèle, laquelle est amenée en rotation autour d'un axe de rotation (84) perpendiculaire ou sensiblement perpendiculaire au plan de niveau (22) et définit un plan de plaque (88) qui forme un angle (90) différent de 90° avec l'axe de rotation (84)
et/ou
e) le dispositif de production de masques d'insolation est conçu pour produire un seul masque d'insolation (28)
et/ou
f) le dispositif de production de masques d'insolation est conçu pour produire un masque d'insolation numérique (28).

10. Dispositif de production de masques d'insolation selon la revendication 8 ou 9, **caractérisé en ce qu'**il comporte une unité de calcul (38) pour le calcul d'une seule mappe binaire à 2 bits (30) pour chaque masque d'insolation (28) en fonction de la couche d'objet (62) à solidifier, laquelle mappe binaire à 2 bits (30) alloue à chaque pixel du masque d'insolation (28) soit la valeur binaire (32) "transparent" soit la valeur binaire (34) "non transparent", pour attribuer la valeur binaire (32) "transparent" à chaque zone de surface (66a) de la mappe binaire à 2 bits (30) dont la taille de structure est inférieure à une taille de structure limite, et pour attribuer une texture d'insolation (52) à chaque zone de surface (66b, 66c) supérieure à la taille de structure limite, laquelle texture d'insolation (52) est réalisée sous la forme d'un motif de pixels assortis des valeurs binaires (32) "transparent" et (34) "non transparent".

11. Dispositif de production de masques d'insolation selon la revendication 10, **caractérisé en ce que**
a) l'unité de calcul (38) est conçue pour attribuer une texture d'insolation (52), laquelle présente au maximum autant de pixels assortis de la valeur binaire (34) "non transparent" que de pixels assortis de la valeur binaire (32) "transparent"
et/ou
b) l'unité de calcul (38) est conçue pour attribuer une texture d'insolation (52), laquelle présente une valeur d'atténuation d'insolation qui est supérieure à 0 et atteint au maximum 0,5,
et/ou
c) l'unité de calcul (38) est conçue pour attribuer une texture d'insolation (52) à chaque zone de surface (66b, 66c) dont la taille de structure est supérieure à la taille de structure limite en fonction de sa taille de structure, dans lequel la valeur d'atténuation de l'insolation de la texture d'insolation (52) augmente à mesure que croît la taille de structure
et/ou
d) l'unité de calcul (38) est conçue pour agencer des textures d'insolation (52) identiques de masques d'insolation (28) destinés à l'insolation de couches d'objet (62) successives dans un plan parallèle au plan de niveau (22) de manière décalée les unes des autres d'un nombre entier de pixels, de préférence de 1 pixel dans une direction x et/ou y du plan parallèle au plan de niveau (22),
et/ou
e) le dispositif de production de masques d'insolation (26) fournit des motifs de texture différents destinés à former les textures d'insolation (52), qui présentent un rapport des pixels assortis de la valeur binaire (34) "non transparent" et des pixels assortis de la valeur binaire (32) "transparent" qui se situe dans une plage comprise entre 0 et 1,
et/ou
f) le dispositif de production de masques d'insolation (28) fournit chaque texture d'insolation (52) sous la forme d'une hachure ou d'un motif régulier,
et/ou
g) l'unité de calcul (38) est conçue pour utiliser exclusivement des textures d'insolation (52) pour lesquelles à la rigueur des coins de pixels assortis de la valeur binaire (34) "non transparent" se rencontrent, mais aucun bord longitudinal de pixels assortis de la valeur binaire (34) "non transparent" n'est adjacent l'un à l'autre.

12. Dispositif de production de masques d'insolation selon la revendication 10 ou 11, **caractérisé en ce que** le dispositif de production de masques d'insolation (26) est conçu
a) pour fournir des textures d'insolation (52), lesquelles peuvent fusionner dans elles-mêmes à la suite d'une translation dans un plan parallèle au plan de niveau (22),
dans lequel en particulier la translation est définie par un vecteur, lequel présente une longueur qui correspond à n pixels dans une direction x et à m pixels dans une direction y non parallèle à la direction x, dans lequel n et m sont des nombres entiers,
et/ou
b) pour fournir des textures d'insolation (52), lesquelles sont constituées d'une trame pixélisée.
et/ou
c) pour attribuer une ligne de bord (56) fermée à chaque masque d'insolation (28) pour chaque zone de surface (66b, 66c) supérieure à la taille de structure limite, dans lequel la valeur binaire "transparent" est attribuée aux pixels formant la ligne de bord (56),
dans lequel en particulier une largeur de la ligne de bord (56) atteint au moins deux pixels, en particulier dans une plage de 2 à 8 pixels, de préférence dans une plage de 2 à 4 pixels,
et/ou
d) pour allouer un temps d'insolation individuel à chaque masque d'insolation (28),
dans lequel en particulier le dispositif de production de masques d'insolation (26) est conçu pour allouer un temps d'insolation identique pour tous les masques d'insolation (28).

13. Dispositif de production de masques d'insolation selon l'une quelconque des revendications 8 à 12, **caractérisé en ce que** le dispositif de production de masques d'insolation (26) est conçu pour attribuer une ligne de contour (74) extérieure fermée sur elle-même et destinée à délimiter la couche d'objet (62) et une ligne de séparation (76) directement adjacente de manière intérieure à la ligne de contour (74) à chaque masque d'insolation (28), dans lequel la valeur binaire (32) "transparent" est attribuée aux pixels destinés à former la ligne de contour (74) et la valeur binaire (34) "non transparent" est attribuée aux pixels destinés à former la ligne de séparation (76),
dans lequel, plus particulièrement, une largeur de la ligne de contour (74) et/ou de la ligne de séparation (76) atteint au moins deux pixels, se situe en particulier dans une plage de 2 à 8 pixels, de préférence dans une plage de 2 à 4 pixels.

14. Dispositif (10) pour fabriquer un objet (12) tridimensionnel par solidification couche par couche d'un matériau (16) pouvant être solidifié sous l'effet d'un rayonnement (14) au moyen de masques d'insolation (28), comportant une source de rayonnement (18) destinée à produire le rayonnement (14) et un dispositif de production de masques d'insolation (26), **caractérisé en ce que** le dispositif de production de masques d'insolation (26) est réalisé sous la forme d'un dispositif de production de masques d'insolation (26) selon l'une quelconque des revendications 8 à 13.

15. Utilisation d'un dispositif (10) pour fabriquer un objet (12) tridimensionnel par solidification couche par couche d'un matériau (16) pouvant être solidifié sous l'effet d'un rayonnement (14) au moyen de masques d'insolation (28) selon la revendication 14, pour la mise en oeuvre d'un procédé pour fabriquer un objet (12) tridimensionnel par solidification couche par couche d'un matériau (16) pouvant être solidifié sous l'effet d'un rayonnement (14) au moyen de masques d'insolation (28) selon l'une quelconque des revendications 1 à 7.
